# EUROPEAN PATENT APPLICATION

(11) **EP 4 796 419 A1**
(43) Date of publication of application: **26.08.2026**
(21) Application number: 24879746.6
(22) Date of filing: 16.10.2024
(51) Int. Cl.: B62D 25/04, B62D 25/20

(54) **IMPACT ABSORPTION MEMBER AND VEHICLE BODY**

(30) Priority: 18.10.2023 JP 2023179623
(71) Applicant: Nippon Steel Corporation, Tokyo 100-8071 (JP)
(72) Inventor: ONO, Atsushi, Tokyo 100-8071 (JP)
(74) Representative: Zimmermann & Partner Patentanwälte mbB
(86) International application number: PCT/JP2024/036876
(87) International publication number: WO 2025/084325

(57) **Abstract**

An impact absorbing member is provided in a vehicle body and formed along a predetermined longitudinal direction and includes a closed cross-section part having a cross section perpendicular to the longitudinal direction that has a closed cross-sectional shape. The impact absorbing member includes a low strength part, a high strength part that is arranged side by side with the low strength part and has a middle part in a sheet thickness direction that has a Vickers hardness higher than a Vickers hardness of a middle part in the sheet thickness direction of the low strength part, and a joint part that joins the low strength part and the high strength part to each other. A maximum bending angle of the high strength part is set in accordance with a maximum bending angle of the low strength part.

## Description

### TECHNICAL FIELD

The present invention relates to an impact absorbing member and a vehicle body.

### BACKGROUND ART

The standard values for collision safety of automobiles are being made more stringent, while there is a demand for reduction in amount of CO₂ emissions of automobiles. Therefore, members of automobiles, such as an impact absorbing member, are required to be reduced in weight and improved in collision safety, and the choice of the material and the design of the structure of the impact absorbing member are important. In particular, for the center pillar, which is an important member for protecting passengers during side collision of the automobile, higher expertise in choice of the material and design of the structure is needed. For the upper part of the center pillar, which is required to have high strength not to be deformed from the viewpoint of protecting passengers, high strength materials can be effectively used. On the other hand, for the lower part of the center pillar, which is required to absorb impact energy, materials having a good balance between strength and fracture resistance are required. Therefore, the tailor welded blank (TWB) that can include two different materials in one blank is useful as the material for the center pillar, from the viewpoint of reduction in weight. Patent Document 1 discloses such a TWB material, for example.

### LIST OF PRIOR ART DOCUMENTS

### PATENT DOCUMENT

Patent Document 1: JP2023-55526A

### SUMMARY OF INVENTION

### TECHNICAL PROBLEM

From the viewpoint of reducing the amount of CO₂ emissions, automobile manufacturers are rapidly developing electric vehicles. With automobiles that transfer the output rotation from the internal combustion engine to the wheels, such as gasoline engine vehicles and diesel engine vehicles, the center pillar tends to be deformed while the side sill connected to the lower part of the center pillar rotates and is largely deformed during side collision of the automobile, because of the structure of the side sill. Therefore, the deformation of the center pillar is local.

On the other hand, with electric vehicles, the battery is disposed to the side of the side sill. And in order to protect the battery, an impact absorbing member or the like for protecting the battery is arranged in the side sill to reinforce the side sill, so that the side sill is less likely to be deformed. With electric vehicles having the side sill that is less likely to be deformed because of the structure for protecting the battery, the amount of deformation of the side sill is relatively small, and accordingly the amount of deformation of the center pillar tends to increase to absorb the impact during side collision. Particularly, in the center pillar outer portion that is formed from a TWB and has a higher tensile strength in the upper part than in the lower part, there is a possibility that deformation of the lower part having a lower strength causes a large deformation of the lower end part (the part around the weld line to the lower part) of the upper part having the higher strength and a fracture in the base metal. It is preferable that the fracture in the base metal does not occur from the viewpoint of ensuring the impact absorption performance, so that the possibility of fracture in the base metal is preferably reduced. Although the sheet thickness of the center pillar outer portion can be increased to reduce the possibility of fracture in the base metal, increasing the sheet thickness of the center pillar outer portion leads to an increase in weight of the center pillar outer portion and therefore is not preferable. In order to increase the impact absorption performance during side collision while reducing the weight of the center pillar outer portion, it is preferable to increase the strength of the steel sheet forming the center pillar outer portion while reducing the thickness of the steel sheet and reduce the possibility of fracture in the member during side collision.

An objective of the present invention is to provide an impact absorbing member that has a reduced weight and can achieve higher collision resistance performance and a vehicle body provided with the same.

### SOLUTION TO PROBLEM

The present invention provides the impact absorbing member and the vehicle body described below.
(1) An impact absorbing member that is provided in a vehicle body and formed along a predetermined longitudinal direction and includes a part having a cross section perpendicular to the longitudinal direction that has a closed cross-sectional shape, including:
   a low strength part;
   a high strength part that is arranged side by side with the low strength part in the longitudinal direction and has a middle part in a sheet thickness direction that has a Vickers hardness higher than a Vickers hardness of a middle part in the sheet thickness direction of the low strength part; and
   a joint part that joins the low strength part and the high strength part to each other,
   wherein a maximum bending angle of the high strength part is set in accordance with a maximum bending angle of the low strength part.

With this configuration, for example, by increasing the maximum bending angle of the material of the high strength part, the difference between the maximum bending angle of the material of the high strength part and the maximum bending angle of the material of the low strength part can be reduced. By setting the bending angles in this way, the material of the high strength part having a high strength because of the high Vickers hardness can exhibit a high bendability. Therefore, even when the high strength part is relatively largely plastically deformed because of the plastic deformation of the low strength part during side collision, the high strength part has a high deformability, and the possibility of fracture of the high strength part around the joint part can be reduced. In addition, the high strength part can be used for a part required to have high strength from the viewpoint of protecting passengers. If a material having a low Vickers hardness (low strength) is used in order to ensure high bendability, the sheet thickness needs to be increased in order to reduce the amount of deformation toward the passengers, which leads to an increase in weight. However, with this configuration, the high strength part has high Vickers hardness and therefore has high strength, so that the weight of the impact absorbing member can be reduced by reducing the thickness of the high strength part while maintaining high impact absorption performance during collision, such as side collision. In this way, by using a material that combines the Vickers hardness (strength) and the bendability for the high strength part, the impact absorbing member can have light weight and high impact absorption performance due to the reduction in possibility of fracture.

(2) The impact absorbing member according to (1) described above, wherein a difference between the maximum bending angle of the high strength part and the maximum bending angle of the low strength part is 100 degrees or less.

With this configuration, during side collision of the vehicle, the possibility of fracture of the high strength part following the bending deformation of the low strength part can be reduced with higher reliability. Therefore, the impact absorbing member can have high impact absorption performance due to the reduction in possibility of fracture.

(3) The impact absorbing member according to (1) or (2) described above, wherein the Vickers hardness of the middle part in the sheet thickness direction of the high strength part is 500 HV or more.

With this configuration, the difference in strength (the strength ratio) between the high strength part and the low strength part tends to be large, and the difference between the bendability of the material of the high strength part and the bendability of the material of the low strength part tends to be large. That is, when the Vickers hardness of the high strength part is 500 HV or more, during side collision, the bending deformation of the high strength part following the bending deformation of the low strength part is likely to cause fracture in the high strength part. In this way, when the Vickers hardness of the high strength part is 500 HV or more, the problem of the possibility of fracture in the high strength part particularly arises. Even in this case, since the maximum bending angle of the high strength part is set in accordance with the maximum bending angle of the low strength part, the possibility of fracture of the high strength part during side collision can be reduced.

(4) The impact absorbing member according to any one of (1) to (3) described above, wherein the Vickers hardness of the middle part in the sheet thickness direction of the low strength part is 150 HV or more.

With this configuration, excessive plastic deformation of the high strength part can be prevented while increasing the impact energy absorption effect due to the plastic deformation of the low strength part during side collision, and thus, the amount of intrusion of the high strength part into the cabin of the vehicle body can be reduced while increasing the impact absorption performance.

(5) The impact absorbing member according to any one of (1) to (4) described above, wherein a ratio HV₁/HV₂ of the Vickers hardness HV₁ of the middle part in the sheet thickness direction of the high strength part to the Vickers hardness HV₂ of the middle part in the sheet thickness direction of the low strength part is 1.3 or more.

With this configuration, the difference in strength (strength ratio) between the high strength part and the low strength part tends to be large, and the difference between the bendability of the material of the high strength part and the bendability of the material of the low strength part tends to be large. That is, when the HV₁/HV₂ is 1.3 or more, the bending deformation of the high strength part following the bending deformation of the low strength part is likely to cause fracture in the high strength part having high Vickers hardness during side collision. In this way, when HV₁/HV₂ is 1.3 or more, the problem of reducing the possibility of fracture in the high strength part particularly arises. Even in this case, since the maximum bending angle of the high strength part is set in accordance with the maximum bending angle of the low strength part, the possibility of fracture of the high strength part during side collision can be reduced.

(6) The impact absorbing member according to any one of (1) to (5) described above, wherein a difference between the maximum bending angle of the low strength part and the maximum bending angle of the high strength part is 30 degrees or less.

With this configuration, the high strength part can be sufficiently bent and deformed following the bending deformation of the low strength part during side collision. As a result, the possibility of fracture of the high strength part during side collision can be reduced.

(7) The impact absorbing member according to any one of (1) to (6) described above, wherein the impact absorbing member is a center pillar that includes a pillar inner portion and a pillar outer portion and is arranged in an up-and-down direction of the vehicle body,
the pillar outer portion includes the low strength part, the joint part and the high strength part, and
the high strength part is disposed above the low strength part.

With this configuration, in the pillar outer portion of the center pillar, which receives most of the impact load during side collision, the material of the high strength part arranged above the low strength part has a high bendability, so that fracture of the high strength part can be prevented with higher reliability. Therefore, the passenger protection effect of the center pillar can be achieved with higher reliability.

(8) The impact absorbing member according to (7) described above, wherein the center pillar is provided with a pair of upper and lower brackets for supporting a door installed to a rear of the center pillar, and
the joint part is disposed at a position lower than a height position of a lower end of the upper bracket.

With this configuration, the impact load input to the center pillar from the upper bracket (the input point of the impact load) located at a far position from the side sill can be received by the high strength part. Therefore, the amount of deformation of the center pillar toward the passengers during side collision can be further reduced.

(9) The impact absorbing member according to (8) described above, wherein the joint part is disposed at a position higher than a height position of an upper end of the lower bracket.

With this configuration, a sufficient range of the low strength part can be ensured. Therefore, both the impact absorption by the low strength part in cooperation with the side sill in an early stage of the side collision and the reduction of the deformation of the center pillar toward the passengers due to the high strength part receiving the impact load from the upper bracket in a late stage of the side collision can be achieved.

(10) The impact absorbing member according to (8) described above, wherein the joint part is disposed at a position lower than a height position of a lower end of the lower bracket.

During side collision, a torsional deformation about an axis along the front-and-rear direction may occur in the side sill. When a torsional deformation occurs in the side sill, if the joint part is disposed at a position lower than the height position of the lower end of the lower bracket, the high strength part can be arranged to extend close to the side sill that is largely deformed during side collision. Therefore, during side collision, the deformation of the center pillar following the intrusion of the side sill into the cabin because of the torsional deformation of the side sill can be reduced by the high strength part. As a result, the amount of intrusion of the center pillar into the cabin can be further reduced, and the tortional deformation of the side sill can be reduced.

(11) The impact absorbing member according to any one of (7) to (9) described above, wherein the vehicle body further includes a side sill that is joined to a lower part of the center pillar and arranged along a front-and-rear direction of the vehicle body and has a closed cross-sectional shape in a cross section perpendicular to the front-and-rear direction,
the side sill includes an outer wall disposed on an outer side in a width direction of the vehicle body in the side sill,
the lower part of the center pillar includes an overlapping part disposed to cover the side sill at a part coupled to the side sill, and
the overlapping part is arranged along the outer wall of the side sill and extended to below a height position at half a height of the outer wall of the side sill in the up-and-down direction.

With this configuration, the joint area between the center pillar and the side sill can be further increased, so that the stress exerted between the side sill and the center pillar during side collision can be further reduced. Furthermore, the load transferred from the center pillar to the side sill during side collision is received by the vehicle body mainly as a torsional moment. Therefore, deformation of the closed cross-sectional shape of the side sill, in particular, the side sill outer portion, can be reduced. Even if side collision occurs, the original closed cross-sectional shape of the side sill before the collision is more likely to remain, so that the side sill has a high torsional rigidity, and the torsional angle of the side sill during side collision can be reduced. Accordingly, the amount of intrusion of the center pillar and the side sill into the cabin can be reduced. On the other hand, for example, if the arrangement is adjusted so that the center pillar does not reach the lower end of the side sill, the center pillar can be prevented from being unnecessarily heavy, and an excellent balance can be achieved between improvement of the reinforcement of the side sill by the shape of the lower part of the center pillar and reduction of the increase in weight of the center pillar.

(12) The impact absorbing member according to any one of (1) to (11) described above, wherein a Vickers hardness at a surface in the sheet thickness direction of the high strength part is at least 100 HV lower than the Vickers hardness of the middle part in the sheet thickness direction of the high strength part.

With this configuration, the maximum bending angle of the high strength part can be further increased. Therefore, the high strength part can follow the bending deformation of the low strength part with higher reliability during side collision, fracture in the high strength part can be prevented, and the impact absorption performance can be improved.

(13) The impact absorbing member according to (12) described above, wherein the high strength part includes a high strength part softened layer extending from the surface in the sheet thickness direction,
the Vickers hardness of the middle part in the sheet thickness direction in a part of the high strength part in which the high strength part softened layer is provided is 500 HV or more,
a thickness of the high strength part softened layer is 80 µm or more and is 5% or more and 20% or less of a sheet thickness of the part of the high strength part in which the high strength part softened layer is provided,
a Vickers hardness of the high strength part softened layer at the surface is 0.5 times or more and less than 0.9 times the Vickers hardness of the middle part in the sheet thickness direction of the part of the high strength part in which the high strength part softened layer is provided,
the high strength part softened layer has a first hardness change region, which is a region from the surface to 40% of a thickness of the high strength part softened layer in the sheet thickness direction, and a second hardness change region, which is a region that is not the first hardness change region in the high strength part softened layer, and
an absolute value ΔHV1 of a change in hardness in the sheet thickness direction in the first hardness change region is greater than an absolute value ΔHV2 of a change in hardness in the sheet thickness direction in the second hardness change region.

With this configuration, since the Vickers hardness of the middle part in the sheet thickness direction of the high strength part is 500 HV or more, the improvement of the deformability of the high strength part because of the softened layer is remarkable. Furthermore, if the thickness of the high strength part softened layer is 20% or less of the sheet thickness described above, the proportion of the high strength part softened layer in the steel sheet that is the material of the high strength part is small, so that the required load-bearing capacity of the high strength part can be maintained. On the other hand, if the thickness of the high strength part softened layer is 80 µm or more and is 5% or more of the sheet thickness described above, the deformability due to the high strength part softened layer can be sufficiently exerted. Furthermore, if the Vickers hardness of the surface of the high strength part is 0.5 times or more the Vickers hardness of the middle part in the sheet thickness direction, the load-bearing capacity during collision, in particular, in a late stage of stroke of collision can be improved. On the other hand, if the Vickers hardness of the surface of the high strength part is less than 0.9 times the Vickers hardness of the middle part in the sheet thickness direction, the deformability can be sufficiently improved. Furthermore, if ΔHV1 is greater than ΔHV2, sufficient load properties can be achieved.

(14) The impact absorbing member according to any one of (1) to (13) described above, wherein a Vickers hardness at a surface in the sheet thickness direction of the low strength part is at least 100 HV lower than the Vickers hardness of the middle part in the sheet thickness direction of the low strength part.

With this configuration, the maximum bending angle of the low strength part can be further increased. Therefore, a crack in the low strength part can be prevented during side collision, and the impact absorption performance can be improved. As a result, the high strength part, which has a high Vickers hardness and a high strength, can be reduced in amount of intrusion into the vehicle to improve the passenger protection effect, and the low strength part can be further reduced in sheet thickness to reduce the weight of the vehicle body while ensuring the amount of impact energy absorption. Furthermore, even when the low strength part is made of a high strength material having a higher Vickers hardness, the possibility of fracture of the low strength part can be reduced, so that the amount of intrusion of the low strength part to the inside of the vehicle body during side collision can be further reduced.

(15) The impact absorbing member according to (14) described above, wherein the low strength part includes a low strength part softened layer extending from the surface in the sheet thickness direction,
the Vickers hardness of the middle part in the sheet thickness direction in a part of the low strength part in which the low strength part softened layer is provided is 150 HV or more,
a thickness of the low strength part softened layer is 80 µm or more and is 5% or more and 20% or less of a sheet thickness of the part of the low strength part in which the low strength part softened layer is provided,
a Vickers hardness of the low strength part softened layer at the surface is 0.5 times or more and less than 0.9 times the Vickers hardness of the middle part in the sheet thickness direction of the part of the low strength part in which the low strength part softened layer is provided,
the low strength part softened layer has a first hardness change region, which is a region from the surface to 40% of a thickness of the low strength part softened layer in the sheet thickness direction, and a second hardness change region, which is a region that is not the first hardness change region in the low strength part softened layer, and
an absolute value ΔHV1' of a change in hardness in the sheet thickness direction in the first hardness change region is greater than an absolute value ΔHV2' of a change in hardness in the sheet thickness direction in the second hardness change region.

With this configuration, since the Vickers hardness of the middle part in the sheet thickness direction of the low strength part is 150 HV or more, the improvement of the deformability of the low strength part because of the low strength part softened layer is remarkable. Furthermore, if the thickness of the low strength part softened layer is 20% or less of the sheet thickness described above, the proportion of the low strength part softened layer in the steel sheet that is the material of the low strength part is small, so that the required load-bearing capacity of the low strength part can be maintained. On the other hand, if the thickness of the low strength part softened layer is 80 µm or more and is 5% or more of the sheet thickness described above, the deformability due to the low strength part softened layer can be sufficiently exerted. Furthermore, if the Vickers hardness of the surface of the low strength part is 0.5 times or more the Vickers hardness of the middle part in the sheet thickness direction, the load-bearing capacity during collision, in particular, in a late stage of stroke of collision can be improved. On the other hand, if the Vickers hardness of the surface of the low strength part is less than 0.9 times the Vickers hardness of the middle part in the sheet thickness direction, the deformability can be sufficiently improved. Furthermore, if ΔHV1' is greater than ΔHV2', sufficient load properties can be achieved.

(16) A vehicle body, including a center pillar and a side sill joined to a lower part of the center pillar,
wherein at least one of the center pillar and the side sill is the impact absorbing member according to any of (1) to (15) described above.

With this configuration, the vehicle body can have reduced weight and higher collision resistance performance.

### ADVANTAGEOUS EFFECTS OF INVENTION

According to the present invention, an impact absorbing member that has a reduced weight and can achieve higher collision resistance performance can be provided.

### BRIEF DESCRIPTION OF DRAWINGS

[Figure 1]

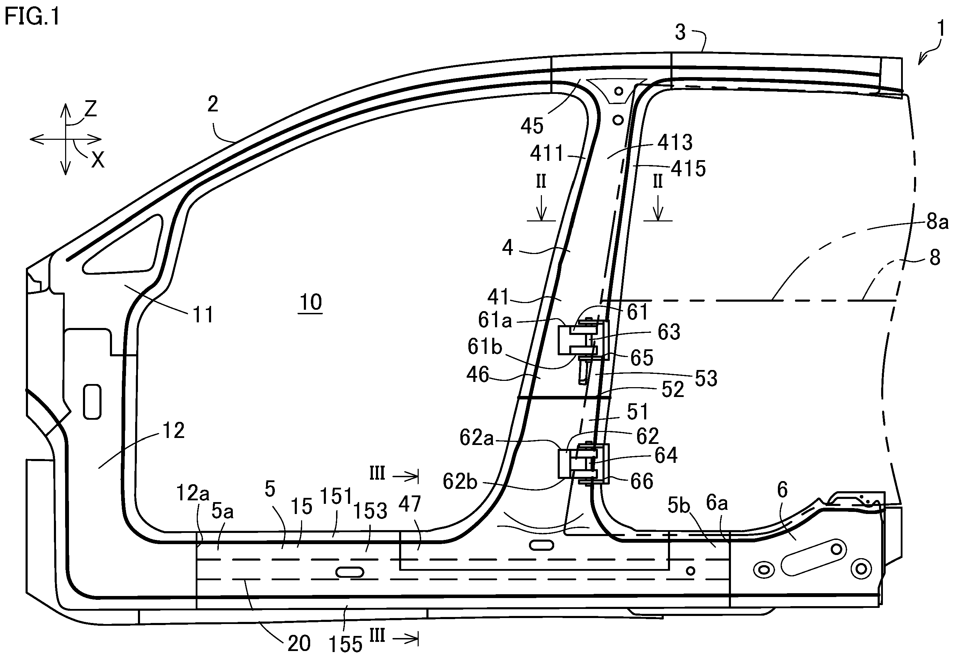

   Figure 1 is a schematic left side view showing essential parts of a vehicle body including an impact absorbing member according to an embodiment of the present invention.
[Figure 2]

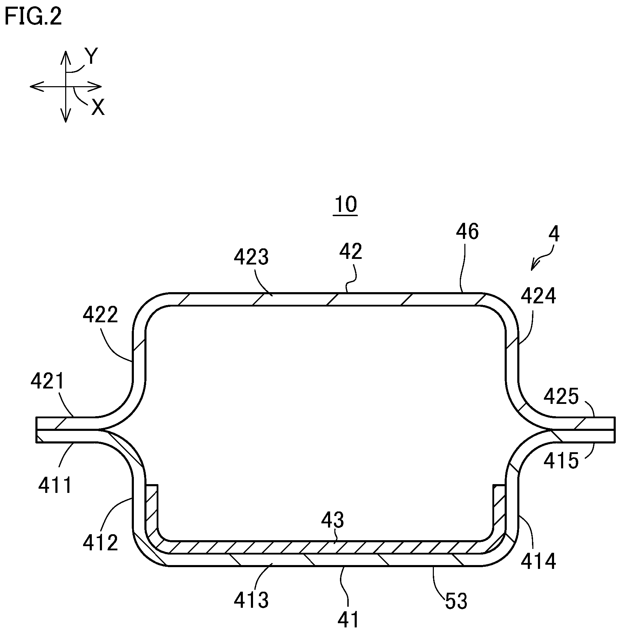

   Figure 2 is a cross-sectional view perpendicular to an up-and-down direction of a closed cross-section part of a center pillar taken along the line II-II in Figure 1, in which illustration parts toward the back in the cross section is omitted.
[Figure 3]

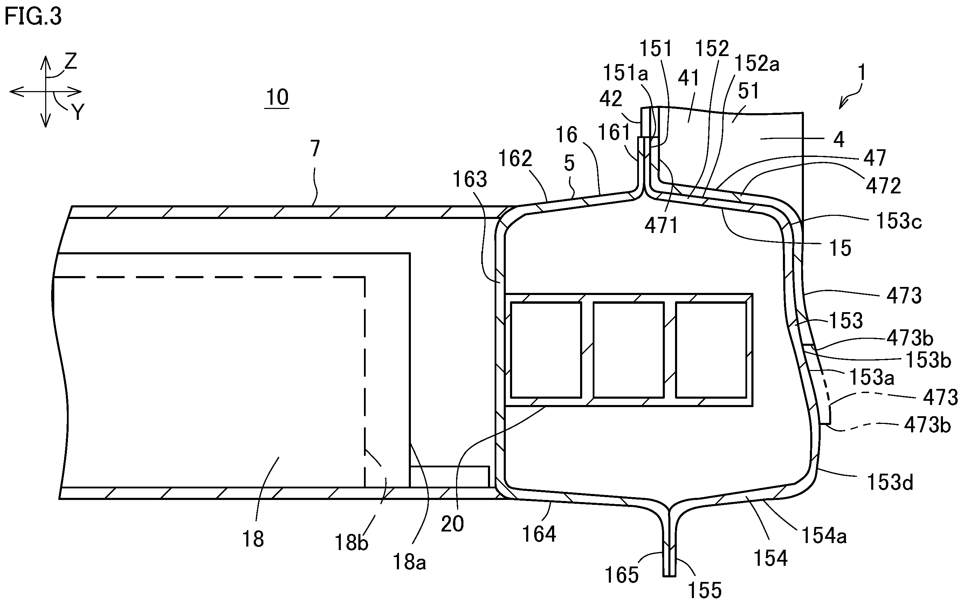

   Figure 3 is a schematic cross-sectional view of essential parts for illustrating a coupling between a side sill outer portion and a pillar outer portion of the center pillar taken along the line III-III in Figure 1, showing a cross section perpendicular to a front-and-rear direction of the vehicle body.
[Figure 4]

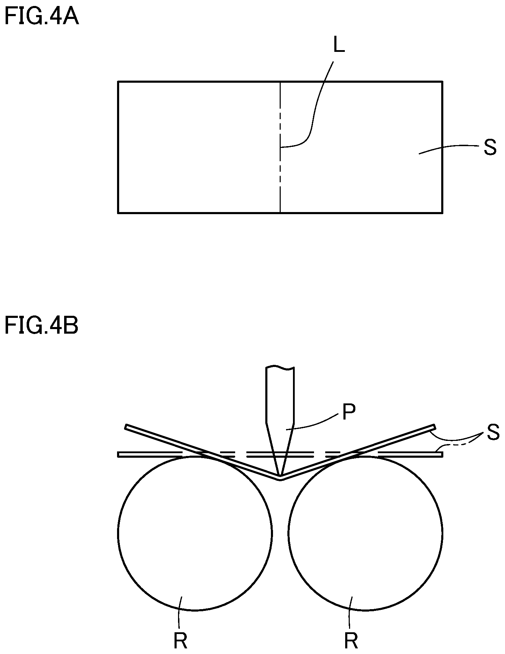

   Figures 4A and 4B are schematic diagrams for illustrating a bending test, Figure 4A is a plan view of a test specimen before the test, and Figure 4B shows the test specimen, a punch and a roll.
[Figure 5]

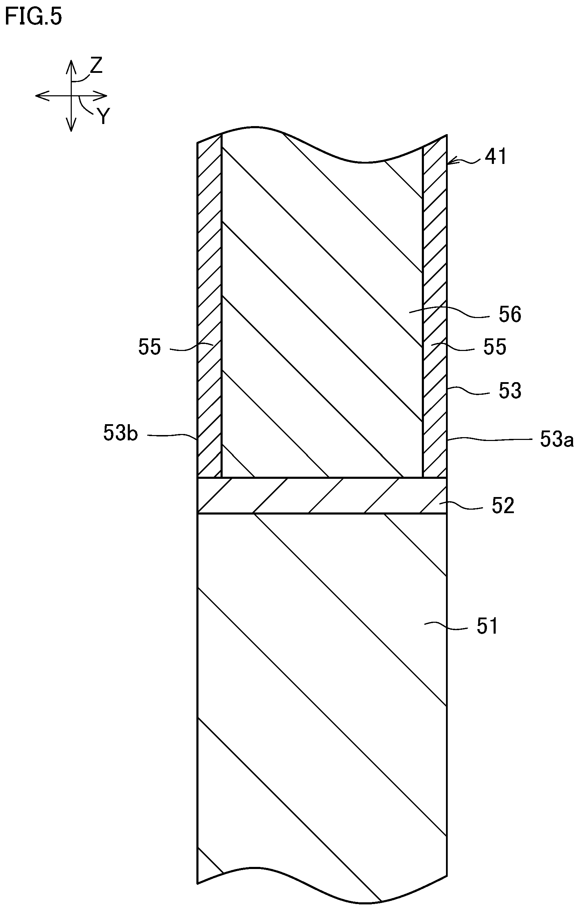

   Figure 5 is a longitudinal cross-sectional view of a part of the pillar outer portion around a joint part according to a variation 1 taken along a sheet thickness direction and the up-and-down direction, in which illustration of parts toward the back in the cross section is omitted.
[Figure 6]

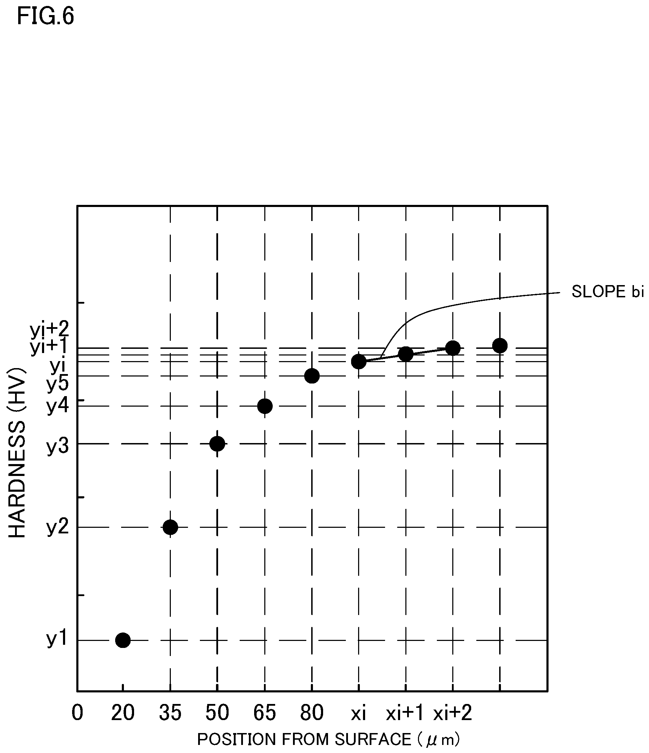

   Figure 6 is a conceptual diagram for illustrating an example of a measurement method for the boundary between a high strength part softened layer and a middle part.
[Figure 7]

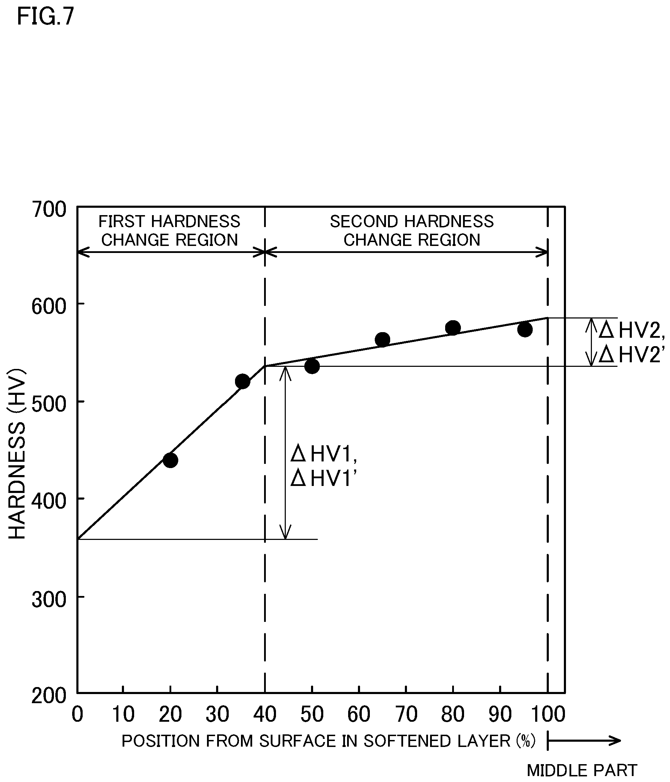

   Figure 7 is a conceptual diagram for illustrating an example of a change in Vickers hardness in the softened layer.
[Figure 8]

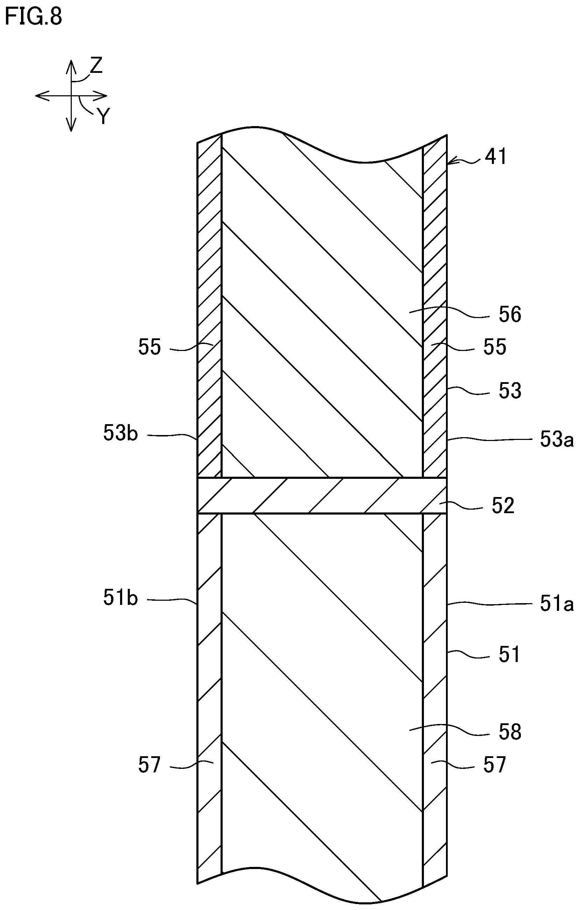

   Figure 8 is a longitudinal cross-sectional view of a part of a pillar outer portion around a joint part according to a variation 2 taken along the sheet thickness direction and the up-and-down direction, in which illustration of parts toward the back in the cross section is omitted.
[Figure 9]

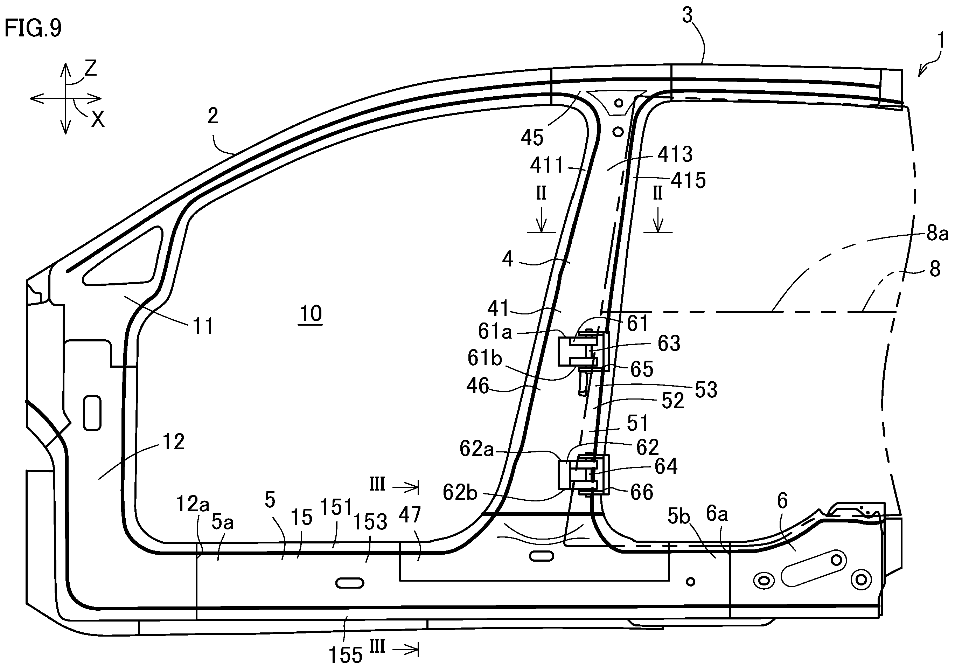

   Figure 9 is a schematic left side view for illustrating a variation 3 in which no reinforcement member is provided in the side sill.
[Figure 10]

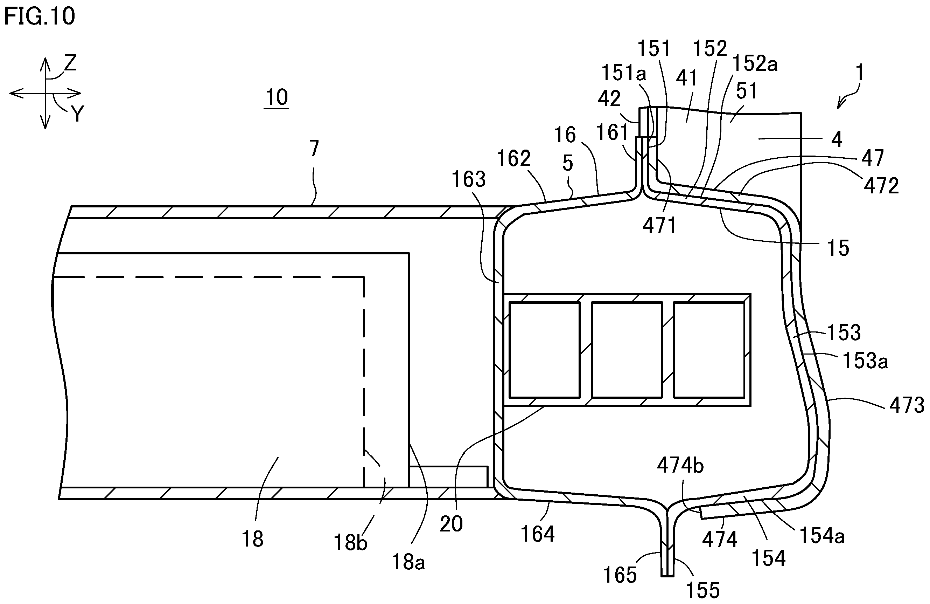

   Figure 10 is a schematic cross-sectional view of essential parts according to a variation 4, which relates to a variation of a overlapping part of the pillar outer portion, showing a cross section perpendicular to the front-and-rear direction.

### DESCRIPTION OF EMBODIMENTS

In the following, an embodiment of the present invention will be described with reference to the drawings. In this embodiment, an impact absorbing member used in an automobile will be described.

Figure 1 is a schematic left side view showing essential parts of a vehicle body 1 including an impact absorbing member according to an embodiment of the present invention. Figure 2 is a cross-sectional view perpendicular to an up-and-down direction Z of a closed cross-section part 46 of a center pillar 4 taken along the line II-II in Figure 1, in which illustration of parts toward the back in the cross section is omitted. Figure 3 is a schematic cross-sectional view of essential parts for illustrating the coupling between a side sill outer portion 15 and a pillar outer portion 41 of the center pillar 4 taken along the line III-III in Figure 1, showing a cross section perpendicular to a front-and-rear direction X of the vehicle body 1. The following description will be made with reference to Figures 1 to 3 as appropriate, unless otherwise specified.

The vehicle body 1 is a part of a vehicle, which may be an automobile. An example of the automobile is a passenger car. Examples of the passenger car include sedans, coupes, hatchbacks, minivans, and sport utility vehicles (SUVs). This embodiment will be described by taking a battery electric vehicle (BEV) as an example.

In this embodiment, the vehicle body 1 is formed from a material including a steel sheet. Although the steel sheet may be an aluminum-plated steel sheet, a zinc-plated steel sheet or other kinds of steel sheets can also be used. Although the plating of the plated steel sheet is not particularly limited, the plating may be molten zinc plating, alloyed molten zinc plating, electrogalvanized plating, Zn-Ni plating (galvanic zinc alloy plating), Sn plating, Al-Si plating, alloyed electrogalvanized plating, molten zinc-aluminum alloy plating, molten zinc-aluminum-magnesium alloy plating, molten zinc-aluminum-magnesium-Si alloy plating, or zinc-vaporized Al plating, for example. The plating process can be performed by passing substrates through a continuous production line.

The vehicle body 1 includes a front pillar 2, a roof rail 3, a center pillar 4, a side sill 5, and a side sill rear portion 6.

The shape of the cross section of the front pillar 2 perpendicular to a longitudinal direction of the front pillar 2 is a closed shape without ends (closed cross-sectional shape). The front pillar 2 includes a front pillar upper portion 11 that extends rearward as it goes upward and is coupled to the roof rail 3 and a front pillar lower portion 12 that is arranged below the front pillar upper portion 11. The front pillar lower portion 12 has an L-shape in side view, for example. A lower rear end edge part 12a of the front pillar lower portion 12 opens to the rear.

The roof rail 3 is arranged on a roof portion of the vehicle body 1 and extends rearward from the front pillar upper portion 11.

The side sill 5 is provided in a lower part of an outer part of the vehicle body 1 in a width direction Y. The side sill 5 is joined to a lower part (a lower overlapping part 47) of the center pillar 4 and is arranged along the front-and-rear direction X of the vehicle body 1. The side sill 5 has a closed cross-sectional shape without ends in a plane perpendicular to the front-and-rear direction X.

The side sill 5 includes a side sill outer portion 15 and a side sill inner portion 16 arranged side by side in the width direction Y.

The side sill outer portion 15 and the side sill inner portion 16 each have a hat-like cross sectional shape in a plane perpendicular to the front-and-rear direction X and form the closed cross sectional shape of the side sill 5 in cooperation. The side sill outer portion 15 is disposed on the outer side of the side sill inner portion 16 in the width direction Y.

The side sill outer portion 15 and the side sill inner portion 16 are formed by a steel sheet, for example. Although the tensile strength of the side sill outer portion 15 and the side sill inner portion 16 is not particularly limited, the value of the tensile strength may be 980 MPa or more, for example.

The side sill outer portion 15 includes an upper flange 151, an upper wall 152 extending outward in the width direction Y from the upper flange 151, an outer wall 153 that extends downward from the upper wall 152 and is arranged at the outermost position in the width direction Y in the side sill 5, a lower wall 154 extending inward in the width direction Y from the outer wall 153, and a lower flange 155 extending downward from the lower wall 154.

The side sill inner portion 16 includes an upper flange 161, an upper wall 162 extending inward in the width direction Y from the upper flange 161, an inner wall 163 extending downward from the upper wall 162, a lower wall 164 extending outward in the width direction Y from the inner wall 163, and a lower flange 165 extending downward from the lower wall 164.

The upper flanges 151 and 161 are joined to each other by welding or adhesive, for example. Similarly, the lower flanges 155 and 165 are joined to each other by welding or adhesive, for example.

A front part 5a of the side sill 5 is fitted to the front pillar lower portion 12 of the front pillar 2 and joined to the front pillar lower portion 12 by welding or adhesive, for example. The side sill 5 extends rearward from the lower rear end edge part 12a of the front pillar lower portion 12. A rear part 5b of the side sill 5 is fitted to the side sill rear portion 6 and joined to the side sill rear portion 6 by welding or adhesive, for example.

The side sill rear portion 6 is disposed to the rear of the side sill 5. The side sill rear portion 6 is a hollow member that extends along the front-and-rear direction X. The cross-sectional shape of the side sill rear portion 6 in a plane perpendicular to the longitudinal direction of the side sill rear portion 6 is a closed shape (closed cross-sectional shape), such as a rectangle. The side sill 5 extends forward from a front end edge part 6a of the side sill rear portion 6.

A battery unit 18 is provided at a position on the inside of the side sill 5 (on a side of the side sill 5) in the width direction Y. The battery unit 18 is arranged below a floor panel 7 that extends inward in the width direction Y from the side sill 5. The battery unit 18 includes a battery case 18a and a battery 18b housed in the battery case 18a. The battery 18b supplies electric power to an electric motor or the like for wheel driving (not shown) through a cable or the like. The battery case 18a is fixed to a member of the vehicle body 1, such as the floor panel 7, by a fixing member, such as a bolt, (not shown). The battery unit 18 is also provided near the center pillar 4 and arranged side by side with the lower overlapping part 47 of the center pillar 4 described later in the width direction Y. The battery unit 18 is disposed adjacent to (for example, at a short distance less than 10 cm from) the side sill 5 in the width direction Y. The battery case 18a protects the battery 18b in cooperation with the side sill 5 and the center pillar 4 during side collision.

In the side sill 5, a reinforcement member 20 is arranged. The reinforcement member 20 is provided to reduce the impact transfer to the battery unit 18 during side collision. The specific shape of the reinforcement member 20 is not limited. The reinforcement member 20 absorbs impact by collapsing while being plastically deformed inward in the width direction Y when a certain level or more of impact load is exerted inward (toward a cabin 10) in the width direction Y from the side sill outer portion 15. In this embodiment, the reinforcement member 20 is arranged side by side with the battery unit 18 in the width direction Y, and the cross section of the reinforcement member 20 perpendicular to the front-and-rear direction X is formed by a plurality of rectangles arranged side by side in the width direction Y. The reinforcement member 20 is fixed to the inner wall 163 of the side sill inner portion 16, for example. The reinforcement member 20 is provided on at least a part of the side sill 5 in the front-and-rear direction X, for example, and may be provided over the whole of the side sill 5.

In addition, a floor cross member (not shown) is arranged on a side of the side sill 5 around the center pillar 4.

During side collision at the side sill 5, in particular, when side collision occurs at the lower overlapping part 47 of the center pillar 4 and the side sill 5, the side sill 5 receives the impact load from the object, provided that the lower rear end edge part 12a of the front pillar 2 constitutes a front fastening position, the lower overlapping part 47 of the center pillar 4 constitutes a middle fastening position, the front end edge part 6a of the side sill rear portion 6 constitutes a rear fastening position, and the position where the floor cross member is disposed constitutes an inner fastening position. When the impact load is equal to or more than a certain level, the side sill 5 absorbs the impact load by being plastically deformed inward in the width direction Y.

Since the reinforcement member 20 is arranged in the side sill 5, a more impact load is needed to deform the reinforced side sill 5 during side collision. Therefore, both the amount of bending deformation and the amount of tortional deformation of the side sill 5 are small. On the other hand, the center pillar 4 receives an accordingly increased impact load and therefore is substantially plastically deformed toward the cabin 10.

In this embodiment, the side sill rear portion 6 is described as a member that constitutes the rear fastening position. However, this is not intended to be limiting. For example, another member, such as a lower end part of a C pillar coupled to the rear end of the side sill 5, may constitute the rear fastening position. The rear fastening position can be any rearward point in the side sill 5 at which the side sill 5 is fastened to another member and is plastically deformed when an impact load is exerted thereon during side collision, and the specific example of the member constituting the rear fastening position is not limited. The same holds true for the front fastening position, and the specific example of the member constituting the front fastening position is not limited. When a member other than the side sill rear portion 6 forms the rear fastening position, the vehicle body 1 need not include the side sill rear portion 6.

The center pillar 4 is arranged to the rear of the front pillar 2 and is provided along the up-and-down direction Z (a predetermined longitudinal direction) from the roof rail 3 to the side sill 5. The center pillar 4 is an impact absorbing member that absorbs an impact during side collision of the vehicle body 1.

The center pillar 4 includes an upper overlapping part 45 that is joined to the roof rail 3, a closed cross-section part 46 that is arranged below the upper overlapping part 45 and above the side sill 5, and the lower overlapping part 47, as a lower part, that is arranged below the closed cross-section part 46 so as to cover an outer face of the side sill 5 at a position where the lower overlapping part 47 is coupled to the side sill 5.

The center pillar 4 further includes a pillar outer portion 41 and a pillar inner portion 42 that are arranged side by side in the width direction Y, and a reinforcing patch 43 arranged between the pillar outer portion 41 and the pillar inner portion 42. The pillar outer portion 41 and the pillar inner portion 42 form the upper overlapping part 45, the closed cross-section part 46, and the lower overlapping part 47. The patch 43 is a member formed by press working of a blank, and is joined to at least one of the pillar outer portion 41 and the pillar inner portion 42. The patch 43 may be omitted.

In the closed cross-section part 46, the pillar outer portion 41 and the pillar inner portion 42 each have a hat-like cross-sectional shape in a plane perpendicular to the up-and-down direction Z. The pillar outer portion 41 and the pillar inner portion 42 are joined to each other, so that the cross section of the closed cross-section part 46 perpendicular to the up-and-down direction Z has a closed cross-sectional shape. The pillar outer portion 41 is disposed on the outer side of the pillar inner portion 42 in the width direction Y.

The pillar outer portion 41 in the closed cross-section part 46 includes a front flange 411, a front wall 412 extending outward in the width direction Y from the front flange 411, a side wall 413 extending rearward from the front wall 412, a rear wall 414 extending inward in the width direction Y from the side wall 413, and a rear flange 415 extending rearward from the rear wall 414.

The pillar inner portion 42 in the closed cross-section part 46 includes a front flange 421, a front wall 422 extending inward in the width direction Y from the front flange 421, a side wall 423 extending rearward from the front wall 422, a rear wall 424 extending outward in the width direction Y from the side wall 423, and a rear flange 425 extending rearward from the rear wall 424. The pillar inner portion 42 may have the shape of a flat plate and have a cross-sectional shape perpendicular to the up-and-down direction Z that is substantially straight in the front-and-rear direction X. In that case, the front wall 422 and the rear wall 424 are omitted, and the front flange 421, the side wall 423, and the rear flange 425 are arranged side by side in the front-and-rear direction X.

The front flanges 411 and 421 are joined to each other by welding or adhesive, for example. Similarly, the rear flanges 415 and 425 are joined to each other by welding or adhesive, for example.

The configuration of the closed cross-section part 46 will be described later in more detail.

Next, the configuration of the lower overlapping part 47 will be described in more detail. The pillar inner portion 42 in the lower overlapping part 47 is joined to the side sill inner portion 16 by welding or adhesive, for example.

The pillar outer portion 41 of the lower overlapping part 47 may simply be referred to as a overlapping part 47, in this embodiment.

The overlapping part 47 is a part of the pillar outer portion 41 of the center pillar 4 that is arranged to cover the outer face of the side sill 5 on the outer side in the width direction Y at the position where the overlapping part 47 is coupled to the side sill 5.

The overlapping part 47 includes an upper flange 471, an upper wall 472 extending outward in the width direction Y from the upper flange 471, and an outer wall 473 extending downward from the upper wall 472.

The upper flange 471 is joined to an outer face 151a of the upper flange 151 of the side sill outer portion 15 by welding or adhesive, for example.

Preferably, the upper wall 472 extends along and is in contact with an upper face 152a of the upper wall 152 of the side sill outer portion 15, and the upper wall 472 may or may not be joined to the upper face 152a by welding or adhesive, for example.

Preferably, the outer wall 473 extends along and is in contact with an outer face 153a of the outer wall 153 of the side sill outer portion 15, and the outer wall 473 may or may not be joined to the outer face 153a by welding or adhesive, for example. In this embodiment, a lower end 473b of the outer wall 473 is a lower end of the overlapping part 47. The lower end 473b of the overlapping part 47 may extend along the upper wall 152, rather than along the outer wall 153 of the side sill outer portion 15.

As shown by the alternate long and short two dashes line in Figure 3, the lower end 473b of the outer wall 473 (overlapping part 47) is preferably arranged along the outer wall 153 of the side sill 5 and reached to a position lower than a height position 153b at half the height of the outer wall 153 of the side sill 5 in the up-and-down direction Z. The height position 153b is a middle position along the length of the outer wall 153 in the up-and-down direction Z in a part of the outer wall 153 on which a middle part of the outer wall 473 in the front-and-rear direction X is overlaid. The length in the up-and-down direction Z of the outer wall 153 is the length between an upper end 153c and a lower end 153d of the outer wall 153 in the up-and-down direction Z in the part of the outer wall 153 on which the middle part of the outer wall 473 in the front-and-rear direction X is overlaid. The upper end 153c of the outer wall 153 is the starting point of the curvature of a curved part extending from the outer wall 153 to the upper wall 152 of the side sill outer portion 15. The lower end 153d of the outer wall 153 is the starting point of the curvature of a curved part extending from the outer wall 153 to the lower wall 154 of the side sill outer portion 15. When the lower end 473b of the outer wall 473 is arranged along the outer wall 153 of the side sill 5 and reached to a position lower than the height position 153b, the lower end 473b may be located at a position lower than a sixth the length in the up-and-down direction Z of the outer wall 153 below the height position 153b (a position lower than a third the length in the up-and-down direction Z of the outer wall 153 from the bottom), may be located at a position lower than a fourth the length in the up-and-down direction Z of the outer wall 153 below the height position 153b (a position lower than a fourth the length in the up-and-down direction Z of the outer wall 153 from the bottom), or may be located at a position lower than a third the length in the up-and-down direction Z of the outer wall 153 below the height position 153b (a position lower than a sixth the length in the up-and-down direction Z of the outer wall 153 from the bottom).

Such an arrangement of the overlapping part 47 can increase the joint area between the center pillar 4 and the side sill 5 and therefore can further reduce the stress exerted between the side sill 5 and the center pillar 4 during side collision. Furthermore, the load transferred from the center pillar 4 to the side sill 5 during side collision is received by the vehicle body 1 mainly as a tortional moment. Therefore, deformation of the closed cross-sectional shape of the side sill 5, in particular, the side sill outer portion 15, can be reduced. Even if side collision occurs, the original closed cross-sectional shape of the side sill 5 before the collision is more likely to remain, so that the side sill 5 has a high torsional rigidity, and the torsional angle of the side sill 5 during side collision can be reduced. Accordingly, the amount of intrusion of the center pillar 4 and the side sill 5 into the cabin 10 can be reduced. On the other hand, if the arrangement is adjusted so that the center pillar 4 does not reach the lower end (lower flange 155) of the side sill 5, the center pillar 4 can be prevented from being unnecessarily heavy, and an excellent balance can be achieved between improvement of the reinforcement of the side sill 5 by the shape of the lower part of the center pillar 4 and reduction of the increase in weight of the center pillar 4.

The lower end 473b of the overlapping part 47 is preferably a straight end part extending in the front-and-rear direction X. With this configuration, the vehicle body 1 can receive the load transferred from the center pillar 4 to the side sill 5 during side collision as a tortional moment over the entire area in which the overlapping part 47 is arranged in the front-and-rear direction X. Therefore, the closed cross-sectional shape of the side sill 5, in particular, the side sill outer portion 15, can be prevented from collapsing with higher reliability.

The center pillar 4 is provided with a pair of upper and lower brackets 61 and 62 for supporting a door 8 installed to the rear of the center pillar 4.

Each of the brackets 61 and 62 may be a plate-shaped member formed by press working of a steel sheet or a block-shaped member formed by cutting of a steel material or the like. Each of the brackets 61 and 62 forms a part of a hinge mechanism that couples the center pillar 4 and the door 8 to each other. Door shafts 63 and 64 are provided between the door 8 and the brackets 61 and 62, respectively. The door 8 is provided with a pair of upper and lower brackets 65 and 66 corresponding to the brackets 61 and 62. The brackets 61 and 62 are coupled to the brackets 65 and 66 by the door shafts 63 and 64, respectively. The door 8 is opened and closed by rotating about the door shafts 63 and 64.

Each of the brackets 61 and 62 is fixed to the pillar outer portion 41 of the center pillar 4 by welding or a fixing member, such as a bolt. In particular, the brackets 61 and 62 are preferably fixed to the side wall 413 of the pillar outer portion 41. With this configuration, when an impact load is input to the pillar outer portion 41 via the brackets 61 and 62, the impact absorption effect of the center pillar 4 owing to a high strength part 53 formed by a material having a high hardness and therefore a high strength and having a high bending deformability can be further improved. The lower bracket 62 is provided close to the overlapping part 47 of the center pillar 4 in the closed cross-section part 46. The upper bracket 61 is provided above the lower bracket 62 and is spaced apart from the lower bracket 62. The upper bracket 61 is provided close to a lower end 8a of an opening of a window of the door 8, for example.

### (Detailed Configuration of Pillar Outer Portion)

A starting material of the pillar outer portion 41 is a tailor welded blank (TWB) formed as one member by joining two blanks separately formed. The pillar outer portion 41 is formed by press working of this starting material.

Thus, the pillar outer portion 41 of the center pillar 4 includes a low strength part 51, a joint part 52, and the high strength part 53. A lower part of the pillar outer portion 41 is formed by the low strength part 51, and an upper part of the pillar outer portion 41 is formed by the high strength part 53. In this embodiment, in the pillar outer portion 41 in the center pillar 4, which receives most of the impact load during side collision, the material of the high strength part 53 arranged above the low strength part 51 has a high bendability, so that possibility of fracture of the high strength part 53 can be prevented with higher reliability. Therefore, the passenger protection effect of the center pillar 4 can be achieved with higher reliability.

As described above, the pillar outer portion 41 includes the low strength part 51, the high strength part 53 that is arranged side by side with the low strength part 51 in the up-and-down direction Z and has a Vickers hardness HV₁ higher than a Vickers hardness HV₂ of the low strength part 51, and the joint part 52 that joins the low strength part 51 and the high strength part 53 to each other. In this embodiment, the Vickers hardness HV₂ of the low strength part 51 and the Vickers hardness HV₁ of the high strength part 53 are the Vickers hardness of the middle part of the low strength part 51 in a sheet thickness direction and the Vickers hardness of a middle part of the high strength part 53 in the sheet thickness direction, respectively. The middle part in this embodiment means a substantial part of the steel sheet part when there is no plating layer and means a substantial part of the steel sheet base metal immediately below the plating layer when there is a plating layer. When there is not only a plating layer but also an alloy layer between the plating layer and the steel sheet base metal, the middle part means a substantial part of the steel sheet base metal immediately below the alloy layer.

Here, a layer including at least one of the plating layer and the alloy layer is referred to as a plated coating. When there is a plated coating, the thickness of the plated coating is measured, and the position in the sheet thickness corresponding to the thickness of the plated coating from the surface of the steel sheet including the plated coating in the sheet thickness direction is regarded as the position of the boundary between the plated coating and the steel sheet base metal. In this embodiment, the "sheet thickness" refers to the thickness of the base metal part obtained by subtracting the thickness of the plated coating on the side of the front surface of the steel sheet and the thickness of the plated coating on the side of the back surface of the steel sheet from the total sheet thickness of the steel sheet including the plated coatings. Furthermore, unless otherwise specified, the surface of the low strength part 51 and the surface of the high strength part 53 each mean the surface of the steel sheet base metal. Furthermore, the thickness of the plated coating is measured with a radio frequency glow discharge optical emission spectrometer (GDS). In the following, a specific measurement method will be described.

In the region of each of the low strength part 51 and the high strength part 53 that has the plated coating, arbitrary three measurement positions are determined. At each measurement point, the concentration of each of elements Fe, Mn, Zn, Si, Al, O, Cr, Ni, Mg, Cu and Sn is measured while performing sputtering on the surface of the plated coating.

The content of each element is analyzed in the depth direction, and the depth at which the Fe concentration becomes 90 % by mass or more for the first time is determined. A mean value of the depths at the measurement points is determined, and the mean value is used as the thickness of the plated coating of the low strength part 51 or the high strength part 53. Note that when the Fe concentration does not become 90 % by mass or more until the depth that can be covered in one GDS measurement is reached, that is, when the thickness of the plated coating is greater than the depth that can be covered in one measurement, the thickness of the plated coating is measured by removing by polishing an amount of the plated coating corresponding to 80% to 90% of the depth reached in the previous measurement at any position different from the measured positions in the same region, determining the depth of the plated coating removed by the polishing from the change in sheet thickness before and after the polishing, performing GDS analysis on the polished surface, and then summing the first and second measurement results and so on. Even when there is a structure other than the plated coating on the surface of the steel sheet base metal, the position of the boundary between the steel sheet base metal and the other structure can be measured in the measurement method described above.

As the GDS measurement device, for example, a Marcus-type radio frequency glow discharge optical emission spectrometer GD-Profiler2 (available from HORIBA, Ltd). This measurement is made under the conditions that the discharge power is 35 W, the Ar pressure at the measurement is 600 Pa, the range of discharge is 4 mm in diameter, the distance between the electrodes is 0.15 mm to 0.25 mm, and the measurement pitch in the sheet thickness direction is 0.01 µm to 0.05 µm, for example.

### (Maximum Bending Angle of High Strength Part and Low Strength Part)

A maximum bending angle θ₁ of the high strength part 53 is set in accordance with a maximum bending angle θ₂ of the low strength part 51. The maximum bending angle can be determined in the VDA bending test (VDA238-100: 2017) prescribed by German Automobile Industry Association (Verband der Automobilindustrie: VDA, German Association of the Automotive Industry). Figures 4A and 4B are schematic diagrams for illustrating the bending test, Figure 4A is a plan view of a test specimen S before the test, and Figure 4B shows the test specimen S, a punch P and a roll R. As shown in Figures 4A and 4B, in this VDA bending test, the test specimen S placed on the two rolls R and R is deformed into a V-shape by pressing the test specimen S into the space between the rolls R and R by the punch P, whose tip end has a radius of 0.4 mm. The length of the test specimen S falls within a range from the sum of the distance between the centers of the rolls R and R and 10 mm to 60 mm. The width of the test specimen S falls within a range from 10 mm to 60 mm. The test specimen S is taken from the high strength part 53 in such a manner that the direction in which the high strength part 53 has a radius of curvature of 500 mm or more agrees with the length direction of the test specimen S. As shown in Figure 4B, the test specimen S is deformed into a V-shape when viewed in the width direction. A ridgeline L formed in the test specimen S when the test specimen S is bent is a line extending in the width direction of the test specimen S. The load of the punch P and the stroke of the punch P at this point are measured. Then, the fracture resistance of the test specimen S is evaluated by calculating the maximum bending angle from the stroke at the time when the load of the punch P, which has increased since the start of the test and then begun decreasing when fracture occurs at the bent of the test specimen S, decreases by 60 N from the maximum load. For calculating the maximum bending angle from the stroke, the formula described in Annex D of VDA238-100 described above is used. Note that when no fracture occurs in the test specimen S when the stroke reaches 14 mm, the value calculated according to the formula for calculating the maximum bending angle from the bending angle at the time when the stroke is 14 mm is used as the maximum bending angle of the test specimen S.

In this embodiment, the maximum bending angle θ₁ of the high strength part 53 can be calculated by performing the VDA bending test by using the test specimen S cut from a part of the high strength part 53 close to the upper bracket 61, for example. The maximum bending angle θ₂ of the low strength part 51 can be calculated by performing the VDA bending test by using the test specimen S cut from a part of the low strength part 51 close to the lower bracket 62, for example. In the VDA bending test, the number of tests of the high strength part 53 is three, and a mean value of the measurement results for the three test specimens S is used as the maximum bending angle θ₁ of the high strength part 53. Similarly, in the VDA bending test, the number of tests of the low strength part 51 is three, and a mean value of the measurement results for the three test specimens S is used as the maximum bending angle θ₂ of the low strength part 51.

In the pillar outer portion 41, the low strength part 51 form the overlapping part 47 and a part of the closed cross-section part 46 that is close to the overlapping part 47 (a lower part of the closed cross-section part 46). The joint part 52 is a part formed by joining the material of the low strength part 51 and the material of the high strength part 53 to each other. The joint part 52 is present as a part at which the material of the low strength part 51 and the material of the high strength part 53 are joined to each other, even before the pillar outer portion 41 is formed by press-forming the material of the low strength part 51 and the material of the high strength part 53. When the low strength part 51 and the high strength part 53 are joined by laser welding, the low strength part 51 and the high strength part 53 face each other in the longitudinal direction of the pillar outer portion 41 at the joint part 52. When the low strength part 51 and the high strength part 53 are joined by spot welding, the low strength part 51 and the high strength part 53 face each other in the sheet thickness direction of the pillar outer portion 41 at the joint part 52. The joint part 52 is preferably oriented straight in the front-and-rear direction X. In that case, the strength distribution of the pillar outer portion 41 in the front-and-rear direction X can be more uniform around the joint part 52. The joint part 52 need not be oriented straight in the front-and-rear direction X. The joint part 52 has only to at least partially join the low strength part 51 and the high strength part 53 in the front-and-rear direction X. The low strength part 51 is arranged below the joint part 52, and the high strength part 53 is arranged above the joint part 52. In the pillar outer portion 41, the high strength part 53 form a part of the closed cross-section part 46 that is close to the upper overlapping part 45 and the upper overlapping part 45.

In this embodiment, the side sill 5 is reinforced by the reinforcement member 20, and therefore, during side collision, the amount of deformation of the side sill 5 is small, and the bending deformation of the center pillar 4 is more significant than the tortional deformation of the side sill 5. Since the amount of plastic deformation of the side sill 5 is small as described above, the center pillar 4 is largely plastically deformed to absorb the impact. In this event, the low strength part 51 is largely plastically deformed inward in the width direction Y to absorb the impact. On the other hand, the high strength part 53, which has a higher strength in order to avoid colliding with the passenger, the amount of inward plastic deformation in the width direction Y of the high strength part 53 tends to be smaller than the amount of plastic deformation of the low strength part 51. However, around the joint part 52, the amount of plastic deformation of the high strength part 53 increases following the inward plastic deformation in the width direction Y of the low strength part 51.

In view of this, in this embodiment, the maximum bending angle θ₁ of the high strength part 53 is set in accordance with the maximum bending angle θ₂ of the low strength part 51. For example, by increasing the maximum bending angle θ₁ of the material of the high strength part 53, the difference between the maximum bending angle θ₁ of the high strength part 53 and the maximum bending angle θ₂ of the material of the low strength part 51 is reduced. By setting the bending angles in this way, the material of the high strength part 53 having a high strength because of the high Vickers hardness can exhibit a high bendability. Therefore, even when the high strength part 53 is relatively largely plastically deformed because of the plastic deformation of the low strength part 51 of the pillar outer portion 41 during side collision, the high strength part 53 has a high deformability, and the possibility of fracture of the pillar outer portion 41 (the high strength part 53) around the joint part 52 can be reduced. In addition, the upper part of the center pillar 4 is required to have high strength from the viewpoint of protecting passengers. If a material having a low Vickers hardness (low strength) is used for the member above the joint part 52 in order to ensure high bendability, the sheet thickness needs to be increased in order to reduce the amount of deformation toward the passengers, which leads to an increase in weight. However, in this embodiment, the high strength part 53 has high Vickers hardness and therefore has high strength, so that the weight of the pillar outer portion 41 can be reduced by reducing the thickness of the high strength part 53 while maintaining high impact absorption performance during collision, such as side collision. In this way, by using a material that combines the Vickers hardness (strength) and the bendability for the high strength part 53 in the upper part of the center pillar 4, the center pillar 4 can have light weight and high impact absorption performance due to the reduction in possibility of fracture.

The difference Δθ between the maximum bending angle θ₁ of the high strength part 53 and the maximum bending angle θ₂ of the low strength part 51 is preferably 100 degrees or less. By setting the difference Δθ in bending angle to be 100 degrees or less, the bending deformation of the high strength part 53 following the bending deformation of the low strength part 51 during side collision of the vehicle can be achieved with higher reliability. Therefore, the center pillar 4 can have high impact absorption performance due to the reduction in possibility of fracture.

### (Sheet Thickness of Low Strength Part and High Strength Part)

The low strength part 51 and the high strength part 53 may have the same sheet thickness or different sheet thicknesses. The sheet thickness of the low strength part 51 and the high strength part 53 may be 0.8 mm to 2.6 mm, for example. By setting the sheet thickness to be 0.8 mm or more, the strength of the pillar outer portion 41 can be sufficiently increased, and the amount of deformation of the center pillar 4 inward in the width direction Y during side collision can be further reduced. By setting the sheet thickness to be 2.6 mm or less, the center pillar 4 can be prevented from being unnecessarily heavy.

The lower limit of the sheet thickness of each of the low strength part 51 and the high strength part 53 may be 0.8 mm, 1.0 mm or 1.2 mm, for example, and the upper limit may be 1.6 mm, 1.8 mm, 2.0 mm, 2.2 mm, 2.3 mm or 2.5 mm, for example. As is apparent from the above description, the sheet thickness of each of the low strength part 51 and the high strength part 53 is preferably 1.0 mm to 2.5 mm, 1.2 mm to 2.3 mm, 1.2 mm to 2.2 mm, 1.2 mm to 2.0 mm, 1.2 mm to 1.8 mm or 1.2 mm to 1.6 mm.

### (Vickers Hardness of Low Strength Part)

The Vickers hardness HV₂ of the middle part of the low strength part 51 in the sheet thickness direction may be 150 HV or more, 300 HV or more, 400 HV or more or 500 HV or more in order to exert high impact absorption performance. Although the upper limit of the Vickers hardness HV₂ of the low strength part 51 is not particularly limited, the upper limit may be 500 HV, 400 HV or 300 HV, for example, from the viewpoint of reducing the possibility of fracture during side collision with higher reliability. Thus, the Vickers hardness HV₂ of the low strength part 51 may be 150 HV to 500 HV, for example.

### (Vickers Hardness of High Strength Part)

From the viewpoint of further reducing the amount of displacement of the high strength part 53 toward the cabin 10 (inward in the width direction Y) during side collision, the Vickers hardness HV₁ of the middle part of the high strength part 53 in the sheet thickness direction is preferably 300 HV or more and may be 400 HV or more, 500 HV or more, 600 HV or more, 750 HV or more, 800 HV or more, 900 HV or more, 950 HV or more, 1000 HV or more, 1050 HV or more or 1100 HV or more. Although the upper limit of the Vickers hardness HV₁ of the high strength part 53 is not particularly limited, the upper limit may be 1100 HV, 1050 HV, 1000 HV, 950 HV, 900 HV, 800 HV, 750 HV, 650 HV, 600 HV, 550 HV or 500 HV, for example, from the viewpoint of reducing the possibility of fracture during side collision with higher reliability. Thus, the Vickers hardness HV₁ of the high strength part 53 is preferably 300 HV to 1100 HV, for example, and is more preferably 500 HV to 1100 HV, for example.

### (Measurement Method for Vickers Hardness of Low Strength Part and High Strength Part)

In this embodiment, a measurement method for the Vickers hardness of the middle part in the sheet thickness direction of the low strength part 51 or the high strength part 53 is as follows. That is, a sample is cut from a part of the low strength part 51, such as a part close to the lower bracket 62, or a part of the high strength part 53, such as a part close to the upper bracket 61, a cut face of the sample perpendicular to the sheet face is used as a measurement face, sample preparation of the measurement face is performed, and then the sample is used for a hardness test. The preparation of the measurement face is performed according to JIS Z 2244: 2020. The measurement face is polished with silicon carbide paper of #600 to #1500 and then mirror-finished with a liquid that is pure water or a diluted alcohol or other solution with diamond powder having a grain size of 1 µm to 6 µm dispersed therein. The hardness test is performed according to JIS Z 2244: 2020. Using a micro-Vickers hardness tester, the measurement is made at ten points at a halfway position along the sheet thickness of the sample under the conditions that the test force is 1 kgf and the distance between the centers of adjacent indentations is three times or more a mean diagonal length of the indentations, and a mean value of the measurements is used as the Vickers hardness of the low strength part 51 or the high strength part 53.

Furthermore, by setting the Vickers hardness HV₂ of the low strength part 51 to be 150 HR or more and setting the Vickers hardness HV₁ of the high strength part 53 to be 500 HV or more, excessive plastic deformation of the high strength part 53 can be prevented while increasing the impact energy absorption effect due to the plastic deformation of the low strength part 51 during side collision, and thus, the amount of intrusion of the upper part of the center pillar 4 into the cabin 10 can be reduced while increasing the impact absorption performance.

In particular, when the Vickers hardness HV₁ of the high strength part 53 is 500 HV or more, the difference in strength (the strength ratio) between the high strength part 53 and the low strength part 51 is large, and the difference between the bendability of the material of the high strength part 53 and the bendability of the material of the low strength part 51 tends to be large. That is, when the Vickers hardness HV₁ is 500 HV or more, during side collision, the bending deformation of the high strength part 53 following the bending deformation of the low strength part 51 is likely to cause fracture in the high strength part 53. When the Vickers hardness HV₁ of the high strength part 53 is 500 HV or more, the problem of the possibility of fracture in the high strength part 53 particularly arises. Even in this case, since the maximum bending angle θ₁ of the high strength part 53 is set in accordance with the maximum bending angle θ₂ of the low strength part 51, the possibility of fracture of the high strength part 53 during side collision can be reduced.

### (Examples of Combination of Vickers Hardness of Low Strength Part and Vickers Hardness of High Strength Part)

In an example of the combination of the Vickers hardness HV₂ of the low strength part 51 and the Vickers hardness HV₁ of the high strength part 53, the Vickers hardness HV₁ of the high strength part 53 is 480 HV to 750 HV, and the Vickers hardness HV₂ of the low strength part 51 is 150 HV to 480 HV (less than the Vickers hardness HV₁ of the high strength part 53). More specifically, preferred combination are the three combinations below.
Example 1) The Vickers hardness HV₁ of the high strength part 53 and the Vickers hardness HV₂ of the low strength part 51: 600 HV and 350 HV
Example 2) The Vickers hardness HV₁ of the high strength part 53 and the Vickers hardness HV₂ of the low strength part 51: 600 HV and 420 HV
Example 3) The Vickers hardness HV₁ of the high strength part 53 and the Vickers hardness HV₂ of the low strength part 51: 720 HV and 480 HV

In all the three examples described above, the ratio HV₁/HV₂ of the Vickers hardness HV₁ of the high strength part 53 to the Vickers hardness HV₂ of the low strength part 51 is 1.3 or more. When the HV₁/HV₂ is 1.3 or more, the difference in strength (strength ratio) between the high strength part 53 and the low strength part 51 is large, and the difference between the bendability of the material of the high strength part 53 and the bendability of the material of the low strength part 51 tends to be large. That is, when the HV₁/HV₂ is 1.3 or more, the bending deformation of the high strength part 53 following the bending deformation of the low strength part 51 is likely to cause possibility of fracture in the high strength part 53 having high Vickers hardness during side collision. When HV₁/HV₂ is 1.3 or more, the problem of reducing the possibility of fracture in the high strength part 53 particularly arises. Even in this case, since the maximum bending angle θ₁ of the high strength part 53 is set in accordance with the maximum bending angle θ₂ of the low strength part 51, the possibility of fracture of the high strength part 53 during side collision can be reduced. HV₁/HV₂ is preferably 1.4 or more, or 1.5 or more.

As the Vickers hardness HV₁ of the high strength part 53 increases, the sheet thickness required for the required impact absorption performance can be reduced, while a crack is more likely to occur during press working of the low strength part 51 and the high strength part 53 and side collision. Therefore, the center pillar 4 having light weight and excellent impact absorption performance can be implemented by appropriately setting the Vickers hardness and the sheet thickness and improving the maximum bending angle θ₁ of the high strength part 53.

### (Combinations of Maximum Bending Angle of Low Strength Part and Maximum Bending Angle of High Strength Part)

The maximum bending angle θ₂ of the low strength part 51 may be 135 degrees to 50 degrees, for example, and in this range, the maximum bending angle θ₂ may be 135 degrees, 70 degrees, 60 degrees or 50 degrees, for example. The maximum bending angle θ₁ of the high strength part 53 may be 60 degrees to 40 degrees, for example, and in this range, the maximum bending angle θ₁ may be 60 degrees, 50 degrees or 40 degrees, for example. Therefore, the difference Δθ between the maximum bending angle θ₁ of the high strength part 53 and the maximum bending angle θ₂ of the low strength part 51 may be 95 degrees or less, 85 degrees or less, 75 degrees or less, 30 degrees or less, 20 degrees or less, 10 degrees or less, or 0 degrees. The minimum value of the difference Δθ is 0 degrees.

The ratio θ₁/θ₂ of the maximum bending angle θ₁ of the high strength part 53 to the maximum bending angle θ₂ of the low strength part 51 may be 40/135 = approximately 0.30 or more, 50/135 = approximately 0.37 or more, 60/135 = approximately 0.44 or more, 40/70 = approximately 0.57 or more, 40/60 = approximately 0.67 or more, 50/70 = approximately 0.71 or more, 50/60 = approximately 0.83 or more, or 60/70 = approximately 0.86 or more. The upper limit of the ratio θ₁/θ₂ is 1.00, for example. Note that the upper limit of the ratio θ₁/θ₂ may be 0.95 or 0.90. As is apparent from the above description, the ratio θ₁/θ₂ may be 0.30 to 1.00, 0.37 to 0.95, 0.44 to 0.90, 0.57 to 0.90, 0.67 to 0.90, 0.71 to 0.90, or 0.86 to 0.90.

### (Combinations of Vickers Hardness and Maximum Bending Angle)

Concerning the preferred combinations of the high strength part 53 and the low strength part 51 in Examples 1) to 3) described above, the difference Δθ between the maximum bending angle θ₂ of the low strength part 51 and the maximum bending angle θ₁ of the high strength part 53 will be described below.

Example 1) In the case of the Vickers hardness HV₁ of the high strength part 53 and the Vickers hardness HV₂ of the low strength part 51: 600 HV and 350 HV, the difference Δθ between the maximum bending angle θ₂ of the low strength part 51 and the maximum bending angle θ₁ of the high strength part 53 is 30 degrees.

Example 2) In the case of the Vickers hardness HV₁ of the high strength part 53 and the Vickers hardness HV₂ of the low strength part 51: 600 HV and 420 HV, the difference Δθ between the maximum bending angle θ₂ of the low strength part 51 and the maximum bending angle θ₁ of the high strength part 53 is 20 degrees.

Example 3) In the case of the Vickers hardness HV₁ of the high strength part 53 and the Vickers hardness HV₂ of the low strength part 51: 720 HV and 480 HV, the difference Δθ between the maximum bending angle θ₂ of the low strength part 51 and the maximum bending angle θ₁ of the high strength part 53 is less than 15 degrees.

As is apparent from the above description, the difference Δθ between the maximum bending angle θ₂ of the low strength part 51 and the maximum bending angle θ₁ of the high strength part 53 is preferably 30 degrees or less. With this configuration, the high strength part 53 can be sufficiently bent and deformed following the bending deformation of the low strength part 51 during side collision. As a result, the possibility of fracture of the high strength part 53 during side collision can be reduced.

Note that the difference Δθ between the maximum bending angle θ₁ of the high strength part 53 and the maximum bending angle θ₂ of the low strength part 51 is preferably set in accordance with the Vickers hardness HV₁ of the high strength part 53 and the Vickers hardness HV₂ of the low strength part 51. In this case, the greater the difference between the Vickers hardness HV₁ of the high strength part 53 and the Vickers hardness HV₂ of the low strength part 51, the greater the difference Δθ in bending angle tends to be, and the maximum bending angle θ₁ of the high strength part 53 and the maximum bending angle θ₂ of the low strength part 51 are set in the range of the difference Δθ described above.

For example, when the Vickers hardness HV₂ of the low strength part 51 is 200 HV, and the Vickers hardness HV₁ of the high strength part 53 is 600 HV, the difference Δθ in bending angle may be 90 degrees or less. When the Vickers hardness HV₂ of the low strength part 51 is 200 HV, and the Vickers hardness HV₁ of the high strength part 53 is 480 HV, the difference Δθ in bending angle may be 85 degrees or less.

When the Vickers hardness HV₂ of the low strength part 51 is 350 HV, and the Vickers hardness HV₁ of the high strength part 53 is 600 HV, the difference Δθ in bending angle may be 30 degrees or less. When the Vickers hardness HV₂ of the low strength part 51 is 350 HV, and the Vickers hardness HV₁ of the high strength part 53 is 480 HV, the difference Δθ in bending angle may be 20 degrees or less.

When the Vickers hardness HV₂ of the low strength part 51 is 420 HV, and the Vickers hardness HV₁ of the high strength part 53 is 600 HV, the difference Δθ in bending angle may be 20 degrees or less. When the Vickers hardness HV₂ of the low strength part 51 is 420 HV, and the Vickers hardness HV₁ of the high strength part 53 is 480 HV, the difference Δθ in bending angle may be 10 degrees or less.

When the Vickers hardness of the low strength part 51 is 350 to 470 HV, and the Vickers hardness of the high strength part 53 is 430 to 530 HV, the difference Δθ in bending angle may be 25 degrees or less, 20 degrees or less, 15 degrees or less, or 10 degrees or less. With the relationship between the Vickers hardness and the difference Δθ in bending angle of the low strength part 51 and the high strength part 53, the high strength part 53 can be sufficiently bent and deformed following the bending deformation of the low strength part 51 during side collision. As a result, the possibility of fracture of the high strength part 53 during side collision can be reduced. The lower limit of the difference Δθ in bending angle in this case is 0 degrees.

### (Height Position of Joint Part)

During side collision, the impact load is exerted on the pillar outer portion 41 from the door 8 via the brackets 61, 62, 65 and 66. Therefore, in the pillar outer portion 41, the parts coupled to the brackets 61 and 62 constitute input points of the impact load during side collision. More specifically, when another vehicle, referred to as a colliding vehicle, collides with a vehicle on one side, the input impact load from the colliding vehicle tends to be greater in the lower part of the vehicle because of the shape of the colliding vehicle (the shape of the colliding vehicle with the lower front part projecting forward with respect to the upper front part of the vehicle) in an early stage of the collision. Therefore, in the early stage of the collision, not only the side sill 5 but also a part of the center pillar 4 close to the side sill 5 needs to absorb the impact, and the lower part of the center pillar 4 is desirably able to be largely plastically deformed. Therefore, the input impact load from the lower bracket 62 of the brackets 61 and 62 for the door 8, which receives more of the impact in the early stage of the collision, is preferably received by the low strength part 51, as in this embodiment. On the other hand, in a late stage of the collision, the upper part of the colliding vehicle also collides with the vehicle, so that the impact is also input to the upper bracket 61 of the brackets 61 and 62. From the viewpoint of protecting the passengers, plastic deformation of the part of the center pillar 4 around the upper bracket 61 needs to be minimized. Therefore, the impact load from the upper bracket 61 is preferably received by the high strength part 53, as in this embodiment.

In this embodiment, the joint part 52 is disposed at a position lower than the height position of a lower end 61b of the upper bracket 61. Therefore, the impact load input to the center pillar 4 from the upper bracket 61 (the input point of the impact load) located at a far position from the side sill 5 can be received by the high strength part 53. Therefore, the amount of deformation of the center pillar 4 toward the passengers during side collision can be further reduced.

Preferably, as in this embodiment, the joint part 52 is disposed at a height position between the lower end 61b of the upper bracket 61 and an upper end 62a of the lower bracket 62 in the up-and-down direction Z of the vehicle body 1. Therefore, a sufficient range of the low strength part 51 can be ensured. Therefore, both the impact absorption by the low strength part 51 in cooperation with the side sill 5 in the early stage of the side collision and the reduction of the deformation of the center pillar 4 toward the cabin 10 due to the high strength part 53 receiving the impact load from the upper bracket 61 in the late stage of the side collision can be achieved.

An embodiment of the present invention has been described above. However, the present invention is not limited to the embodiment described above. Various modifications can be made to the present invention without departing from the scope of the present invention set forth in the claims. In the following, different elements from those in the embodiment and variations described above will be mainly described, the like elements are denoted by the like reference numerals, and detailed descriptions thereof will be omitted.

### <Variation 1>

In the embodiment described above, a configuration in which the steel sheet base metal has a substantially uniform strength distribution in the thickness direction has been described as an example. However, this is not intended to be limiting. Figure 5 is a longitudinal cross-sectional view of a part of the pillar outer portion 41 around the joint part 52 according to a variation 1 taken along the sheet thickness direction and the up-and-down direction Z, in which illustration of parts toward the back in the cross section is omitted. As shown in Figure 5, a high strength part softened layer 55 may be present in at least one of the vicinity of an outer face 53a of the high strength part 53 and the vicinity of an inner face 53b of the high strength part 53. In the variation 1, the high strength part softened layer 55 is present both in the vicinity of the outer face 53a and in the vicinity of the inner face 53b, and a middle part 56 is present between the high strength part softened layers 55.

### (Presence Range of High Strength Part Softened Layer)

Each high strength part softened layer 55 is preferably directly connected to the joint part 52 over the entire range of the joint part 52, from the viewpoint of improving the fracture possibility reducing effect around the joint part 52 during side collision. Even when each high strength part softened layer 55 is not directly connected to the joint part 52, the high strength part softened layer 55 is preferably present close to the joint part 52. Whether each high strength part softened layer 55 is directly connected to the joint part 52 or is not directly connected to the joint part 52, each high strength part softened layer 55 is preferably present from the vicinity of the joint part 52 to a position higher than the upper end 61a of the upper bracket 61. In this way, the bending deformability of the high strength part 53 at the time of bending deformation of the low strength part 51 during side collision can be increased and the fracture possibility of the high strength part 53 can be reduced. In particular, if each high strength part softened layer 55 is connected to the joint part 52 over the entire range of the joint part 52 in the longitudinal direction (front-and-rear direction X), the fracture possibility reducing effect for the high strength part 53 can be further improved. If each high strength part softened layer 55 is formed over the entire range of the high strength part 53 in the up-and-down direction Z, the fracture possibility reducing effect for the high strength part 53 can be further improved.

### (Summary of Thickness Range of High Strength Part Softened Layer)

Each high strength part softened layer 55 is formed by reducing the content of carbon of a part of the blank as the starting material of the high strength part 53 around the part that is to constitute the outer face 53a or the inner face 53b (a part that is to constitute the high strength part softened layer 55) to be lower than the content of carbon of a part of the blank that is to constitute the middle part 56, for example. The method of forming the high strength part softened layer 55 is not particularly limited, and any method can be used. In this variation, each high strength part softened layer 55 is preferably formed to have a predetermined thickness from the corresponding surface 53a or 53b, from the viewpoint of ensuring a sufficient strength of the high strength part 53 while increasing the maximum bending angle θ₁ of the high strength part 53, for example. The lower limit of the predetermined thickness is 80 µm, for example, and the upper limit is 200 µm, for example.

### (Summary of Distribution of Vickers Hardness of High Strength Part Softened Layer and Summary of Vickers Hardness of Middle Part)

In each high strength part softened layer 55, the Vickers hardness decreases as the distance from a halfway point along the sheet thickness of the high strength part 53 increases. Of each high strength part softened layer 55, the part that constitutes the surface 53a or 53b has the lowest Vickers hardness in the high strength part 53, and the Vickers hardness is at least 100 HV lower than the Vickers hardness of the middle part 56, for example. The upper limit of the difference in Vickers hardness between the surfaces 53a and 53b and the middle part 56 of the high strength part 53 may be 250 HV, 300 HV, 350 HV, 400 HV, 500 HV, 550 HV, 600 HV or 650 HV, for example. Note that when simply referred to as the "Vickers hardness of the high strength part 53", it refers to the Vickers hardness of the middle part 56.

In this variation 1 in which the high strength part 53 is provided with the high strength part softened layers 55, the maximum bending angle θ₁ of the high strength part 53 can be increased by approximately 20 degrees, for example, compared with the case where the high strength part softened layers 55 are not formed (the embodiment).

As described above, the Vickers hardness of the surfaces 53a and 53b in the sheet thickness direction of the high strength part 53 is at least 100 HV lower than the Vickers hardness of the middle part 56 at the center in the sheet thickness direction of the high strength part 53. Therefore, the maximum bending angle θ₁ of the high strength part 53 can be further increased. Therefore, the high strength part 53 can follow the bending deformation of the low strength part 51 with higher reliability during side collision, a crack in the high strength part 53 can be prevented, and the impact absorption performance can be improved.

Examples of the configuration of the high strength part 53 will be more specifically described.

### (Vickers Hardness of Middle Part of High Strength Part)

The Vickers hardness of the middle part 56 in the sheet thickness direction of the part of the high strength part 53 in which the high strength part softened layers 55 are provided is preferably 500 HV or more. When the Vickers hardness of the middle part 56 is 500 HV or more, the improvement of the deformability of the high strength part 53 because of the high strength part softened layers 55 is remarkable. The Vickers hardness of the middle part 56 is preferably 600 HV or more, and more preferably 700 HV or more. Although the upper limit of the Vickers hardness of the middle part 56 is not particularly limited, the Vickers hardness is preferably 900 HV or less and more preferably 800 HV or less from the viewpoint of formability, for example. Thus, preferred examples of the lower limit of the Vickers hardness of the middle part 56 include 500 HV, 550 HV, 600 HV, 700 HV, 720 HV, and 750 HV. Preferred examples of the upper limit of the Vickers hardness of the middle part 56 include 1100 HV, 1050 HV, 1000 HV, 950 HV, 900 HV, 850 HV, and 800 HV. As is apparent from the above description, the Vickers hardness of the middle part 56 may be 500 HV to 1100 HV, 550 HV to 1050 HV, 600 HV to 1000 HV, 700 HV to 950 HV, 720 HV to 900 HV, 750 HV to 850 HV, or 750 HV to 800 HV. Alternatively, the Vickers hardness of the middle part 56 may be 550 HV to 1000 HV, 550 HV to 950 HV, 550 HV to 900 HV, 550 HV to 850 HV, or 550 HV to 800 HV.

### (Combinations of Vickers Hardness of Middle Part and Maximum Bending Angle)

The Vickers hardness of the low strength part 51 (the middle part of the low strength part 51) in the variation 1 may be 350 HV to 530 HV. When the Vickers hardness of the low strength part 51 is 350 HV to 530 HV, and the Vickers hardness of the middle part 56 of the high strength part 53 is 550 HV to 1050 HV, the difference Δθ in bending angle may be 30 degrees or less, 25 degrees or less, 20 degrees or less, 15 degrees or less, 10 degrees or less, or 5 degrees or less. The lower limit of the difference Δθ in bending angle is preferably 0 degrees. With such a relationship between the Vickers hardness of the middle part of each of the low strength part 51 and the high strength part 53 and the difference Δθ in bending angle, the high strength part 53 can be sufficiently bent and deformed following the bending deformation of the low strength part 51 during side collision. As a result, the possibility of fracture of the high strength part 53 during side collision can be reduced. Note that the Vickers hardness of the middle part 56 of the high strength part 53 may fall within a range of 350 HV to 770 HV.

### (Details of Thickness of Each High Strength Part Softened Layer)

The thickness of each high strength part softened layer 55 in the sheet thickness direction is preferably 80 µm or more and 5% or more and 20% or less of the sheet thickness of the part of the high strength part 53 in which the high strength part softened layers 55 are provided. If the thickness of each high strength part softened layer 55 is 20% or less of the sheet thickness described above, the proportion of the high strength part softened layers 55 in the steel sheet that is the material of the high strength part 53 is small, so that the required load-bearing capacity of the high strength part 53 can be maintained. The thickness of each high strength part softened layer 55 is preferably 17% or less of the sheet thickness described above, and more preferably 14% or less. On the other hand, when the high strength part softened layer 55 is provided on the entire surface of the steel sheet that is the material of the high strength part 53, the deformability due to the high strength part softened layers 55 can be sufficiently exerted if the thickness of each high strength part softened layer 55 is 80 µm or more and is 5% or more of the sheet thickness described above. The thickness of each high strength part softened layer 55 is more preferably 8% or more of the sheet thickness described above. As is apparent from the above description, the thickness of each high strength part softened layer 55 may be 5% to 17%, 5% to 14%, 8% to 20%, 8% to 17%, or 8% to 14% of the sheet thickness described above.

### (Measurement Method for Thickness Position of Boundary between High Strength Part Softened Layer and Middle Part)

Next, a measurement method for the boundary between the high strength part softened layer 55 and the middle part 56 will be described. Figure 6 is a conceptual diagram for illustrating an example of the measurement method for the boundary between the high strength part softened layer 55 and the middle part 56. A sample is taken from the high strength part 53, a cut face of the sample perpendicular to the sheet face of the sample is used as a measurement face, sample preparation of the measurement face is performed, and then the sample is used for the hardness test. The preparation of the measurement face is performed in such a manner that the unevenness is minimized and no shear drop occurs in the vicinity of the surface of the sample, in order to accurately measure the Vickers hardness in the vicinity of the surface of the sample. In this variation, using CROSS SECTION POLISHER available from JEOL, Ltd., the measurement face is sputtered with an argon ion beam. In this process, using a rotating sample holder available from JEOL, Ltd., the measurement face is irradiated with the argon ion beam in 360 degrees, in order to prevent occurrence of streaky unevenness on the measurement face.

Using a micro-Vickers hardness tester, the measurement of the Vickers hardness of the sample with the prepared measurement face is performed. In the region of the sample corresponding to the softened layer from the surface, the measurement is performed by applying a test force of 50 gf in the direction perpendicular to the surface (the sheet thickness direction).

The measurement position closest to the surface of the sample is a thickness position 20 µm from any of the two surfaces 53a and 53b (which are surfaces of the steel sheet base metal immediately below the plating layer when there is a plating layer or surfaces of the steel sheet base metal immediately below the alloy layer when there is not only a plating layer but also an alloy layer between the plating layer and the steel sheet base metal). Measurement points for measuring the boundary between the high strength part softened layer 55 and the middle part 56 are at regular intervals of 5 µm or more and 15 µm or less in the sheet thickness direction, and the distance between the centers of adjacent indentations is three times or more a mean diagonal length of the indentations. Depending on the mean diagonal length of the indentations, the center distance between adjacent indentations that is three times or more the mean diagonal length of the indentations cannot be ensured in a row in the sheet thickness direction. In such a case, the measurement is made at positions that are different in both the sheet thickness direction and the direction perpendicular to the sheet thickness direction. In this way, the measurement condition that the indentations are at regular intervals of 5 µm or more and 15 µm or less in the sheet thickness direction and the distance between the centers of adjacent indentations is three times or more the mean diagonal length of the indentations can be satisfied. The measurement is made in the range from the thickness position 20 µm from the surface to the halfway position along the sheet thickness.

### (Calculation Method for Slope of Vickers Hardness at Each Thickness Position after Measurement of Boundary between High Strength Part Softened Layer and Middle Part)

In the measurement of the boundary between the high strength part softened layer 55 and the middle part 56, the slope of the Vickers hardness at each thickness position after measurement of the Vickers hardness is a slope Δbi obtained from the Vickers hardness at a plurality of consecutive points (three points), for example. The slope Δbi is calculated according to the following formula (1).
[Formula 1] $Δ bi = \frac{3 {\sum }_{k = i}^{i + 2} xk yk - {\sum }_{k = i}^{i + 2} xk {\sum }_{k = i}^{i + 2} yk}{3 {{\sum }_{k = i}^{i + 2} {xk}^{2} - \left({\sum }_{k = i}^{i + 2} xk\right)}^{2}}$

In this formula,
Δbi: the slope (HV/µm) calculated for three, i-th to i+2-th points
xi: the thickness position (µm) of the i-th point from the surface of the high strength part 53
xk: the thickness position (µm) from the surface of the high strength part 53
yk: a mean value (HV) of the Vickers hardness at three different points at the thickness position xk

The slope Δbi is determined sequentially from the surface of the high strength part 53 according to the formula (1), and the thickness position of the measurement point closest to the surface of the steel sheet among three measurement points at the time when the slope Δbi becomes 0.5 (HV/µm) or less for the first time is regarded as the thickness position of the boundary between the high strength part softened layer 55 and the middle part 56.

### (Relationship between Vickers Hardness of High Strength Part Softened Layer and Vickers Hardness of Middle Part)

The Vickers hardness of the high strength part softened layers 55 at the surfaces 53a and 53b of the high strength part 53 is preferably 0.5 times or more and less than 0.9 times the Vickers hardness of the middle part 56 in the part of the high strength part 53 in which the high strength part softened layers 55 are provided.

### (Measurement Methdo for Vickers Hardness of Middle Part of High Strength Part)

A measurement method for the Vickers hardness of the middle part 56 is as follows. A sample is cut from the high strength part 53, a cut face of the sample perpendicular to the sheet face is used as a measurement face, sample preparation of the measurement face is performed, and then the sample is used for a hardness test. The preparation of the measurement face is performed according to JIS Z 2244: 2020. The measurement face is polished with silicon carbide paper of #600 to #1500 and then mirror-finished with a liquid that is pure water or a diluted alcohol or other solution with diamond powder having a grain size of 1 µm to 6 µm dispersed therein. The hardness test is performed according to JIS Z 2244: 2020. Using a micro-Vickers hardness tester, the measurement is made at ten points at a halfway position along the sheet thickness of the sample under the conditions that the test force is 1 kgf and the distance between the centers of adjacent indentations is three times or more a mean diagonal length of the indentations, and a mean value of the measurements is used as the Vickers hardness of the middle part 56.

### (Measurement Method for Vickers Hardness of Surface of High Strength Part)

The Vickers hardness of the surface of the high strength part 53 is measured in a cut face obtained by cutting the high strength part 53 in the sheet thickness direction according to the Vickers hardness test described in JIS Z 2244: 2020.

After sample preparation of the cut face described above is performed as a measurement face, the cut face is used for the hardness test. The preparation of the measurement face is performed in such a manner that the unevenness is minimized and no shear drop occurs in the vicinity of the surface, in order to accurately measure the Vickers hardness in the vicinity of the surface of the sample. In this variation, using CROSS SECTION POLISHER available from JEOL, Ltd., the measurement face is sputtered with an argon ion beam. In this process, using a rotating sample holder available from JEOL, Ltd., the measurement face is irradiated with the argon ion beam in 360 degrees, in order to prevent occurrence of streaky unevenness on the measurement face.

Using a micro-Vickers hardness tester, measurement of the Vickers hardness of the sample with the prepared measurement face is performed. In this process, the measurement points are at a thickness position 20 µm from the surface of the high strength part 53. When there is a plating layer in the high strength part 53, the measurement points are at a thickness position 20 µm from the surface of the steel sheet base metal immediately below the plating layer. When there is not only a plating layer but also an alloy layer between the plating layer and the steel sheet base metal in the high strength part 53, the measurement points are at a thickness position 20 µm from the surface of the steel sheet base metal immediately below the alloy layer. The measurement is made at ten points at the thickness position from the surface of the sample described above under the conditions that a test force of 10 gf is applied in the direction (sheet thickness direction) perpendicular to the sheet face and the distance between the centers of adjacent indentations is three times or more a mean diagonal length of the indentations, and a mean value of the measurements is used as the Vickers hardness of the surface of the high strength part 53.

If the Vickers hardness of the surface of the high strength part 53 is 0.5 times or more the Vickers hardness of the middle part 56, the load-bearing capacity during collision, in particular, in a late stage of stroke of collision can be improved. The high strength part softened layer 55 at the surface of the high strength part 53 preferably has a Vickers hardness that is 0.6 times or more the Vickers hardness of the middle part 56. On the other hand, if the Vickers hardness of the surface of the high strength part 53 is less than 0.9 times the Vickers hardness of the middle part 56, the deformability can be sufficiently improved. The high strength part softened layer 55 at the surface of the high strength part 53 preferably has a Vickers hardness less than 0.8 times the Vickers hardness of the middle part 56.

### (Change in Vickers Hardness in High Strength Part Softened Layer)

Figure 7 is a conceptual diagram for illustrating an example of the change in Vickers hardness in the high strength part softened layer 55. As shown in Figure 7, the high strength part softened layer 55 preferably has a first hardness change region, which is a region from the surface 53a or 53b to 40% of the thickness of the high strength part softened layer 55 in the sheet thickness direction, and a second hardness change region, which is a region that is not the first hardness change region in the high strength part softened layer 55. An absolute value ΔHV1 of the change in hardness in the sheet thickness direction in the first hardness change region is preferably greater than an absolute value ΔHV2 of the change in hardness in the sheet thickness direction in the second hardness change region. If ΔHV1 is greater than ΔHV2, sufficient load characteristics can be achieved.

The absolute value ΔHV1 of the change in hardness in the first hardness change region is preferably 100 HV or more and less than 200 HV. If ΔHV1 is 100 HV or more, the stress concentration during bending deformation can be relaxed, and the bending properties can be further improved. On the other hand, if ΔHV1 is less than 200 HV, the effect of relaxing the stress concentration during bending deformation can be further improved, and better bending properties can be achieved. Thus, when ΔHV1 is 100 HV or more and less than 200 HV, good bending properties can be achieved, and the deformability of the high strength part 53 can be improved. Specifically, in a late stage of stroke of collision, the drop of the load immediately after the peak of the load can be slowed. Therefore, as described above, the absolute value ΔHV1 of the change in hardness in the first hardness change region is preferably 100 HV or more and less than 200 HV. Note that while the lower limit of ΔHV1 is preferably 100 HV, the upper limit may be less than 200 HV, less than 300 HV, or less than 400 HV.

### (Measurement Method for Vickers Hardness of First and Second Hardness Change Regions of High Strength Part Softened Layer)

Next, a measurement method for the hardness of the first hardness change region and the second hardness change region will be described. A sample is taken from the high strength part 53, a cut face of the sample perpendicular to the sheet face of the sample is used as a measurement face, sample preparation of the measurement face is performed, and then the sample is used for the hardness test. The preparation of the measurement face is performed in such a manner that the unevenness is minimized and no shear drop occurs in the vicinity of the surface of the sample, in order to accurately measure the Vickers hardness in the vicinity of the surface of the sample. In this variation, using CROSS SECTION POLISHER available from JEOL, Ltd., the measurement face is sputtered with an argon ion beam. In this process, using a rotating sample holder available from JEOL, Ltd., the measurement face is irradiated with the argon ion beam in 360 degrees, in order to prevent occurrence of streaky unevenness on the measurement face.

Using a micro-Vickers hardness tester, the measurement of the Vickers hardness of the sample with the prepared measurement face is performed. In the region of the sample corresponding to the softened layer from the surface, the measurement is performed by applying a load of 10 gf as a test force in the direction perpendicular to the surface (the sheet thickness direction). In this process, the total number of measurement points varies with the sheet thickness of the sample, and the number of measurement points for calculating ΔHV1 and ΔHV2 described later is set according to the description in JIS Z 2244: 2020.

The thickness of the high strength part softened layer 55 is 80 µm or more and is 5% or more and 20% or less of the sheet thickness of the part of the high strength part 53 in which the high strength part softened layer 55 is provided. The first hardness change region is a region in the high strength part softened layer 55 from the surface to 40% of the thickness thereof, and in this embodiment, is present from the surface of the high strength part 53 to a thickness position from a minimum of 40 µm to a maximum of 80 µm, for example.

The measurement position closest to the surface of the sample is a thickness position 20 µm from the surface (which is the surface of the steel sheet base metal immediately below the plating layer when there is a plating layer or the surface of the steel sheet base metal immediately below the alloy layer when there is not only a plating layer but also an alloy layer between the plating layer and the steel sheet base metal). The measurement point at the thickness position 20 µm from the surface is different from the measurement point for measuring the Vickers hardness of the surface of the high strength part 53 described above. The measurement in the first hardness change region is made at at least two points of the indentations that are at regular intervals of 15 µm or less in the sheet thickness direction in such a manner that the distance between the centers of adjacent indentations is three times or more a mean diagonal length of the indentations. Depending on the mean diagonal length of the indentations, the measurement may be able to be made only once in a row in the sheet thickness direction in the first hardness change region. In such a case, the measurement is made at positions that are different in both the sheet thickness direction and the direction perpendicular to the sheet thickness direction. In this way, the Vickers hardness is measured at at least two points in the first hardness change region while satisfying the measurement condition that the indentations are at regular intervals of 15 µm or less in the sheet thickness direction and the distance between the centers of adjacent indentations is three times or more the mean diagonal length of the indentations.

The thickness of the high strength part softened layer 55 is 80 µm or more and is 5% or more and 20% or less of the sheet thickness of the part of the high strength part 53 in which the high strength part softened layer 55 is provided, and the Vickers hardness of the second hardness change region is measured in this thickness range excluding the first hardness change region. When the thickness of the high strength part softened layer 55 is 80 µm to 200 µm, the second hardness change region is present in a range of the thickness position from 32 µm to 80 µm (a thickness range of 48 µm) from the surface of the high strength part 53 at the minimum and from 80 µm to 200 µm (a thickness range of 120 µm) from the surface of the high strength part 53 at the maximum. The measurement in the second hardness change region is made at at least two points of the indentations that are at regular intervals of 15 µm or less in the sheet thickness direction in such a manner that the distance between the centers of adjacent indentations is three times or more a mean diagonal length of the indentations. Depending on the mean diagonal length of the indentations, the measurement may be unable to be made at adjacent two points at the predetermined interval in a row in the sheet thickness direction in the second hardness change region. In such a case, the measurement is made at positions that are different in both the sheet thickness direction and the direction perpendicular to the sheet thickness direction. In this way, the Vickers hardness in the second hardness change region is measured while satisfying the measurement condition that the indentations are at regular intervals of 15 µm or less in the sheet thickness direction and the distance between the centers of adjacent indentations is three times or more the mean diagonal length of the indentations. The measurement in the second hardness change region may be made in the same row as the first hardness change region. In the second hardness change region, the measurement may be made, for example, at a total of four points including one point in the vicinity of the boundary between the first hardness change region and the second hardness change region, one point in the vicinity of the boundary between the middle part 58 and the second hardness change region, and two points between these two points. When the second hardness change region is present up to 200 µm from the surface of the steel sheet, the measurement points in the first hardness change region and the second hardness change region may be thickness positions 20 µm, 35 µm, 50 µm, 65 µm, 80 µm, 95 µm, 110 µm, 125 µm, 140 µm, 155 µm, 170 µm, 185 µm and 200 µm from the surface of the steel sheet, for example.

In the case of a sample having the high strength part softened layer 55 disposed on both sides of the middle part 56 of the high strength part 53, the same measurement is made on the side of a first surface of the sample and on the side of a second surface opposite to the first surface.

### (Calculation Method for Absolute Value ΔHV1 of Hardness Change after Measurement in First Hardness Change Region)

ΔHV1 is calculated in the procedure described below. That is, a hardness slope Δa for the first hardness change region is calculated according to the formula (2) from all the measurement points included in the region from the surface of the sample cut from the high strength part 53 to 40% of the thickness of the whole of the high strength part softened layer 55 (the first hardness change region). Here, ai denotes the proportion (%) of the distance of an i-th measurement point from the surface to the thickness of the whole of the softened layer, ci denotes the Vickers hardness (HV) for ai, and n denotes the total number of the measurement points included in the region from the surface to 40% of the thickness of the whole of the softened layer (the first hardness change region).
[Formula 2] $Δ a = \frac{n {\sum }_{i = 1}^{n} ai ci - {\sum }_{i = 1}^{n} ai {\sum }_{i = 1}^{n} ci}{n {{\sum }_{i = 1}^{n} {ai}^{2} - \left({\sum }_{i = 1}^{n} ai\right)}^{2}}$

In this formula,
Δa: the slope (HV/%) of the hardness change in the sheet thickness direction in the first hardness change region
ai: the proportion (%) of the distance of an i-th measurement point from the surface to the thickness of the whole of the softened layer
ci: a mean value (HV) of the Vickers hardness at three different points at the position in the thickness direction of the i-th measurement point
n: the total number of the measurement points included in the first hardness change region on the side of the first surface

In the case of a sample having the high strength part softened layer 55 disposed on both sides of the middle part 56, Δa1 for the side of the first surface is determined according to the formula (2) based on the measurement result of the Vickers hardness on the side of the first surface, and Δa2 for the side of the second surface is further determined according to the formula (2) based on the measurement result of the Vickers hardness on the side of the second surface. An arithmetic mean value of Δa1 and Δa2 can be regarded as Δa.

ΔHV1 can be determined by multiplying Δa determined according to the formula (2) by the proportion of the thickness of the first hardness change region in the sheet thickness direction to the thickness of the whole of the softened layer.

### (Calculation Method for Absolute Value ΔHV2 of Hardness Change after Measurement in Second Hardness Change Region)

ΔHV2 is calculated in the procedure described below. That is, a hardness slope ΔA for the second hardness change region is calculated according to the formula (3) from all the measurement points included in the region from 40% to 100% of the thickness of the whole of the high strength part softened layer 55 on the side of the surface of the sample (the second hardness change region). Here, Ai denotes the proportion (%) of the distance of an i-th measurement point from the surface to the thickness of the whole of the softened layer, Ci denotes the Vickers hardness (HV) for Ai, and N denotes the total number of the measurement points included in the region from 40% to 100% of the thickness of the whole of the softened layer (the second hardness change region) on the side of the surface.
[Formula 3] $Δ A = \frac{N {\sum }_{i = 1}^{N} Ai Ci - {\sum }_{i = 1}^{N} Ai {\sum }_{i = 1}^{N} Ci}{N {{\sum }_{i = 1}^{N} {Ai}^{2} - \left({\sum }_{i = 1}^{N} Ai\right)}^{2}}$

In this formula,
ΔA: the slope (HV/%) of the hardness change in the sheet thickness direction in the second hardness change region
Ai: the proportion (%) of the distance of an i-th measurement point from the surface to the thickness of the whole of the softened layer
Ci: a mean value (HV) of the Vickers hardness at three different points at the position in the thickness direction of the i-th measurement point
N: the total number of the measurement points included in the second hardness change region on the side of the first surface

In the case of a sample having the high strength part softened layer 55 disposed on both sides of the middle part 56, ΔA1 for the side of the first surface is determined according to the formula (3) based on the measurement result of the Vickers hardness on the side of the first surface, and ΔA2 for the side of the second surface is further determined according to the formula (3) based on the measurement result of the Vickers hardness on the side of the second surface. An arithmetic mean value of ΔA1 and ΔA2 can be regarded as ΔA.

ΔHV2 can be determined by multiplying ΔA determined according to the formula (3) by the proportion of the thickness of the second hardness change region in the sheet thickness direction to the thickness of the whole of the softened layer.

Note that during side collision, the high strength part softened layer 55 on the side of the outer face 53a primarily exerts the effect of preventing a crack because of the large maximum bending angle θ₁. Therefore, the high strength part softened layer 55 need not be provided on the side of the inner face 53b. In that case, the part on the side of the inner face 53b has the same Vickers hardness as the middle part 56, and the high strength part softened layer 55 is present only on the side of the outer face 53a.

### <Variation 2>

In the embodiment described above, a configuration in which no softened layer is formed in the low strength part 51 has been described as an example. However, this is not intended to be limiting. Figure 8 is a longitudinal cross-sectional view of a part of the pillar outer portion 41 around the joint part 52 according to a variation 2 taken along the sheet thickness direction and the up-and-down direction Z, in which illustration of parts toward the back in the cross section is omitted. As shown in Figure 8, a low strength part softened layer 57 may be present in the low strength part 51. In this case, the low strength part softened layer 57 is present both in the vicinity of the outer face 51a of the low strength part 51 and in the vicinity of the inner face 51b. In this case, the low strength part softened layer 57 is present on both sides of the low strength part 51 in the sheet thickness direction, and a middle part 58 is present between the low strength part softened layers 57.

### (Vickers Hardness of Middle Part of Low Strength Part)

Even when the Vickers hardness of the middle part 58 is more than 300 HV and is 400 HV, for example, fracture possibility of the low strength part 51 may be able to be avoided during side collision. However, in the configuration in which the Vickers hardness of the middle part 58 is more than 300 HV, the presence of the low strength part softened layer 57 can markedly improve the effect of reducing the fracture possibility of the low strength part 51 during side collision. Preferred examples of the lower limit of the Vickers hardness of the middle part 58 include 300 HV, 350 HV, 400 HV, 420 HV, and 450 HV. Preferred examples of the upper limit of the Vickers hardness of the middle part 58 include 530 HV, 500 HV, 480 HV, and 450 HV. As is apparent from the above description, the Vickers hardness of the middle part 58 may be 300 HV to 530 HV, 350 HV to 500 HV, 400 HV to 480 HV, or 420 HV to 450 HV.

### (Combinations of Vickers Hardness of Middle Part and Maximum Bending Angle)

When the Vickers hardness of the low strength part 51 is 420 HV to 530 HV, and the Vickers hardness of the middle part 56 of the high strength part 53 is 550 HV to 1050 HV, the difference Δθ in bending angle may be 50 degrees or less, 45 degrees or less, 40 degrees or less, 35 degrees or less, 30 degrees or less, or 25 degrees or less. The lower limit of the difference Δθ in bending angle is preferably 0 degrees. With such a relationship between the Vickers hardness of the middle part of each of the low strength part 51 and the high strength part 53 and the difference Δθ in bending angle, the high strength part 53 can be sufficiently bent and deformed following the bending deformation of the low strength part 51 during side collision. As a result, the possibility of fracture of the high strength part 53 during side collision can be reduced. Note that the Vickers hardness of the middle part 56 of the high strength part 53 described above may fall within a range of 550 HV to 770 HV.

### (Presence Range of Low Strength Part Softened Layer)

When the joint part 52 is located at a height position between the lower end 61b of the upper bracket 61 and the upper end 62a of the lower bracket 62 (the position shown in Figure 1), the low strength part softened layers 57 on the surfaces 51a and 51b of the low strength part 51 are preferably present from a position higher than the upper end 62a of the lower bracket 62 to a position lower than the lower end 62b of the lower bracket 62. In this way, each low strength part softened layer 57 can be arranged to cover the lower bracket 62, which is most largely deformed in the vehicle body 1 during side collision, and the possibility of fracture of the low strength part 51 can be reduced and the amount of impact energy absorption of the low strength part 51 can be improved by the improvement of the bending deformability of the low strength part 51 by the low strength part softened layer 57. The low strength part softened layer 57 may be formed over the entire range of the low strength part 51 in the up-and-down direction Z. In particular, when the joint part 52 is located at a position lower than the lower end 62b of the lower bracket 62 (the position shown in Figure 9) as described later, the low strength part softened layer 57 is preferably formed over the entire range of the low strength part 51 in the up-and-down direction Z. In that case, the range of the low strength part 51 in the center pillar 4 is relatively narrow, and the whole of the low strength part 51 tends to be deformed during side collision. Therefore, the possibility of fracture of the low strength part 51 can be reduced and the amount of impact energy absorption of the low strength part 51 can be improved by the improvement of the bending deformability of the low strength part 51 by the low strength part softened layer 57.

### (Summary of Thickness Range of Low Strength Part Softened Layer)

Each low strength part softened layer 57 is formed by reducing the content of carbon of a part of the blank as the starting material of the low strength part 51 around the part that is to constitute the outer face 51a or the inner face 51b (a part that is to constitute the low strength part softened layer 57) to be lower than the content of carbon of a part of the blank that is to constitute the middle part 58, for example. The method of forming the low strength part softened layer 57 is not particularly limited, and any method can be used. In this variation, each low strength part softened layer 57 is preferably formed to have a predetermined thickness from the corresponding surface 51a or 51b, from the viewpoint of ensuring a sufficient strength of the low strength part 51 while increasing the maximum bending angle of the low strength part 51, for example. The lower limit of the predetermined thickness is 80 µm, for example, and the upper limit is 200 µm, for example.

### (Summary of Distribution of Vickers Hardness of Low Strength Part Softened Layer and Summary of Vickers Hardness of Middle Part)

In each low strength part softened layer 57, the Vickers hardness decreases as the distance from a halfway position along the sheet thickness of the low strength part 51 increases. Of each low strength part softened layer 57, the part that constitutes the surface 51a or 51b has the lowest Vickers hardness in the low strength part 51, and the Vickers hardness is at least 100 HV to 250 HV lower than the Vickers hardness of the middle part 58, for example. Note that when simply referred to as the "Vickers hardness of the low strength part 51", it refers to the Vickers hardness of the middle part 58.

In this variation 2 in which the low strength part 51 is provided with the low strength part softened layers 57, the maximum bending angle of the low strength part 51 can be increased by approximately 20 degrees, for example, compared with the case where the low strength part softened layers 57 are not formed (the embodiment).

As described above, the Vickers hardness of the surfaces 51a and 51b in the sheet thickness direction of the low strength part 51 is at least 100 HV lower than the Vickers hardness of the middle part 58 at the center in the sheet thickness direction of the low strength part 51. Therefore, the maximum bending angle of the low strength part 51 can be further increased. Therefore, the low strength part 51 can follow the bending deformation of the center pillar 4 with lower reliability during side collision, a crack in the low strength part 51 can be prevented, and the impact absorption performance can be improved. As a result, the high strength part 53, which has a high Vickers hardness and a high strength, can be reduced in intrusion into the vehicle to improve the passenger protection effect, and the low strength part 51 can be further reduced in sheet thickness to reduce the weight of the vehicle body 1 while ensuring the amount of impact energy absorption. Furthermore, even when the low strength part 51 is made of a high strength material having a higher Vickers hardness, the possibility of fracture of the low strength part 51 can be reduced, so that the amount of intrusion of the low strength part 51 to the inside of the vehicle body during side collision can be further reduced.

Examples of the configuration of the low strength part 51 will be more specifically described.

### (Vickers Hardness of Middle Part of High Strength Part)

The Vickers hardness of the middle part 58 in the sheet thickness direction of the part of the low strength part 51 in which the low strength part softened layers 57 are provided is preferably 150 HV or more. When the Vickers hardness of the middle part 58 is 150 HV or more, a sufficient strength of the low strength part 51 during side collision can be ensured. The Vickers hardness of the middle part 58 may be more than 200 HV, 250 HV or more, 300 HV or more, 400 HV or more, or 500 HV or more. Although the upper limit of the Vickers hardness of the middle part 58 is not particularly limited, the Vickers hardness is preferably 500 HV or less from the viewpoint of the ability of following the deformation of the center pillar 4 during side collision.

### (Details of Thickness Range of Each Low Strength Part Softened Layer)

The thickness of each low strength part softened layer 57 in the sheet thickness direction is preferably 80 µm or more and 5% or more and 20% or less of the sheet thickness of the part of the low strength part 51 in which the low strength part softened layers 57 are provided. If the thickness of each low strength part softened layer 57 is 20% or less of the sheet thickness described above, the proportion of the low strength part softened layers 57 in the steel sheet that is the material of the low strength part 51 is small, so that the required load-bearing capacity of the low strength part 51 can be maintained. The thickness of each low strength part softened layer 57 is preferably 17% or less of the sheet thickness described above, and more preferably 14% or less. On the other hand, when the low strength part softened layer 57 is provided on the entire surface of the steel sheet that is the material of the low strength part 51, the deformability due to the low strength part softened layers 57 can be sufficiently exerted if the thickness of each low strength part softened layer 57 is 80 µm or more and is 5% or more of the sheet thickness described above. The thickness of each low strength part softened layer 57 is more preferably 8% or more of the sheet thickness described above. As is apparent from the above description, the thickness of each low strength part softened layer 57 may be 5% to 17%, 5% to 14%, 8% to 20%, 8% to 17%, or 8% to 14% of the sheet thickness described above.

### (Measurement Method for Thickness Position of Boundary between Low Strength Part Softened Layer and Middle Part)

The measurement method for the boundary between the low strength part softened layer 57 and the middle part 58 is the same as the measurement method for the boundary between the high strength part softened layer 55 and the middle part 56.

### (Calculation Method for Slope of Vickers Hardness at Each Thickness Position after Measurement of Boundary between Low Strength Part Softened Layer and Middle Part)

The calculation method for the slope of the Vickers hardness at each thickness position after measurement of the Vickers hardness during measurement of the boundary between the low strength part softened layer 57 and the middle part 58 is the same as the calculation method for the slope of the Vickers hardness at each thickness position after measurement of the Vickers hardness during measurement of the boundary between the high strength part softened layer 55 and the middle part 56.

### (Relationship between Vickers Hardness of Low Strength Part Softened Layer and Vickers Hardness of Middle Part)

The Vickers hardness of the low strength part softened layers 57 at the surfaces 51a and 51b of the low strength part 51 is preferably 0.5 times or more and less than 0.9 times the Vickers hardness of the middle part 58 in the part of the low strength part 51 in which the low strength part softened layers 57 are provided.

### (Measurement Method for Vickers Hardness of Middle Part of Low Strength Part)

The measurement method for the Vickers hardness of the middle part 58 of the low strength part 51 is the same as the measurement method for the Vickers hardness of the middle part 56 of the high strength part 53.

### (Measurement Method for Vickers Hardness of Surface of Low Strength Part)

The measurement method for the Vickers hardness of the surface of the low strength part 51 is the same as the measurement method for the Vickers hardness of the surface of the high strength part 53.

If the Vickers hardness of the surface of the low strength part 51 is 0.5 times or more the Vickers hardness of the middle part 58, the load-bearing capacity during collision, in particular, in a late stage of stroke of collision can be improved. The low strength part softened layer 57 at the surface of the low strength part 51 preferably has a Vickers hardness that is 0.6 times or more the Vickers hardness of the middle part 58. On the other hand, if the Vickers hardness of the surface of the low strength part 51 is less than 0.9 times the Vickers hardness of the middle part 58, the deformability can be sufficiently improved. The low strength part softened layer 57 at the surface of the low strength part 51 preferably has a Vickers hardness less than 0.8 times the Vickers hardness of the middle part 58.

### (Change in Vickers Hardness in Low Strength Part Softened Layer)

Figure 7 is also a conceptual diagram for illustrating an example of the change in Vickers hardness in the low strength part softened layer 57. As shown in Figure 7, the low strength part softened layer 57 preferably has a first hardness change region, which is a region from the surface 51a or 51b to 40% of the thickness of the low strength part softened layer 57 in the sheet thickness direction, and a second hardness change region, which is a region that is not the first hardness change region in the low strength part softened layer 57. An absolute value ΔHV1' of the change in hardness in the sheet thickness direction in the first hardness change region is preferably greater than an absolute value ΔHV2' of the change in hardness in the sheet thickness direction in the second hardness change region. As far as ΔHV1' is greater than ΔHV2', sufficient load properties can be achieved.

The absolute value ΔHV1' of the change in hardness in the first hardness change region is preferably 100 HV or more and less than 200 HV. If ΔHV1' is 100 HV or more, the stress concentration during bending deformation can be relaxed, and the bending properties can be further improved. On the other hand, if ΔHV1' is less than 200 HV, the effect of relaxing the stress concentration during bending deformation can be further improved, and better bending properties can be achieved. Thus, when ΔHV1' is 100 HV or more and less than 200 HV, good bending properties can be achieved, and the deformability of the low strength part 51 can be improved. Specifically, in a late stage of stroke of collision, the drop of the load immediately after the peak of the load can be slowed. Therefore, as described above, the absolute value ΔHV1' of the change in hardness in the first hardness change region is preferably 100 HV or more and less than 200 HV. Note that while the upper limit of ΔHV1' is preferably less than 200 HV, the lower limit may be 50 HV, more than 50 HV, 55 HV, 60 HV, or 100 HV.

### (Measurement Method for Vickers Hardness of First and Second Hardness Change Regions of Low Strength Part Softened Layer)

The measurement method for the hardness of the first hardness change region and the second hardness change region of the low strength part 51 is the same as the measurement method for the hardness of the first hardness change region and the second hardness change region of the high strength part 53.

In the case of a sample having the low strength part softened layer 57 disposed on both sides of the middle part 58 of the low strength part 51, the same measurement is made on the side of a first surface of the sample and on the side of a second surface opposite to the first surface.

### (Calculation Method for Absolute Values ΔHV1 and ΔHV2' of Hardness Change after Measurement in First and second Hardness Change Regions)

The calculation method for ΔHV1' and ΔHV2' of the low strength part 51 is the same as the calculation method for ΔHV1 and ΔHV2 of the high strength part 53.

Note that during side collision, the low strength part softened layer 57 on the side of the outer face 51a primarily exerts the effect of preventing a crack because of the large maximum bending angle. Therefore, the low strength part softened layer 57 need not be provided on the side of the inner face 51b. In that case, the part on the side of the inner face 51b has the same Vickers hardness as the middle part 58, and the low strength part softened layer 57 is present only on the side of the outer face 51a.

Note that in this variation 2, the high strength part 53 need not be provided with the high strength part softened layers 55. In that case, most of the steel sheet base metal forming the high strength part 53 constitutes the middle part 56. When the high strength part 53 has a plating layer, the steel sheet base metal is present immediately below the plating layer. When the high strength part 53 has not only a plating layer but also an alloy layer between the plating layer and the steel sheet base metal, the steel sheet base metal is present immediately below the alloy layer.

### <Variation 3>

In the embodiment described above, an example has been described in which the vehicle is a BEV and includes the reinforcement member 20 for protecting the battery 18b from side collision in the side sill 5. However, this is not intended to be limiting. Figure 9 is a schematic left side view for illustrating a variation 3 in which no reinforcement member 20 is provided in the side sill 5. As shown in Figure 9, when the vehicle is a vehicle provided with an internal combustion engine, such as a gasoline engine or a diesel engine, and does not include the battery provided to the side of the side sill 5 (on the inner side in the width direction Y), the reinforcement member 20 may not be provided in the side sill 5. Note that in actuality, many vehicles provided with an internal combustion engine also have a reinforcing member in the side sill 5. The vehicle shown in Figure 9 may be a plug-in hybrid electric vehicle (PHEV). When the vehicle is PHEV, the driving battery for driving the wheels is fixed to the floor panel 7 or the like at a relatively large distance (a distance more than 10 cm, for example) from the side sill 5 in the width direction Y.

With such a configuration, the amount of deformation of the side sill 5 during side collision tends to be large, and a tortional deformation also occurs in the side sill 5. Since the amount of plastic deformation of the side sill 5 is relatively large, the amount of impact energy absorption of the side sill 5 is large, and the side sill 5 and the center pillar 4 absorb the impact in cooperation. When the amount of impact energy absorption of the center pillar 4 is small, the range of the low strength part 51, which is largely plastically deformed inward in the width direction Y to absorb the impact, is preferably narrowed so that the high strength part 53, which reduces the amount of inward plastic deformation of the vehicle body 1 in the width direction Y, extends closer to the side sill 5, in order to prevent the vehicle body 1 from coming into contact with any passenger.

Thus, in this variation, the joint part 52 is preferably disposed at a height position lower than the upper end 62a of the lower bracket 62 in the up-and-down direction Z, in particular, a height position lower than the lower end 62b of the lower bracket 62 in the up-and-down direction Z. For example, the joint part 52 is disposed below the lower end 62b and above the side sill 5. With the vehicle shown in Figure 9, a torsional deformation about an axis along the front-and-rear direction X occurs in the side sill 5 during side collision. When a torsional deformation occurs in the side sill 5, the joint part 52 disposed as described above allows the high strength part 53 to be arranged to extend close to the side sill 5 that is largely deformed during side collision. Therefore, during side collision, the deformation of the pillar outer portion 41 following the intrusion of the side sill 5 into the cabin 10 because of the torsional deformation of the side sill 5 can be reduced by the high strength part 53. As a result, the amount of intrusion of the center pillar 4 into the cabin 10 can be further reduced, and the tortional deformation of the side sill 5 can be reduced.

### <Variation 4>

In the embodiment described above, an example has been described in which the lower end 473b of the overlapping part 47 of the pillar outer portion 41 extends along the outer wall 153 of the side sill outer portion 15. However, this is not intended to be limiting. Figure 10 is a schematic cross-sectional view of essential parts according to a variation 4, which relates to a variation of the overlapping part 47 of the pillar outer portion 41, showing a cross section perpendicular to the front-and-rear direction.

The overlapping part 47 according to the variation 4 has a lower wall 474 extending inward in the width direction Y from the outer wall 473 in addition to the upper flange 471, the upper wall 472, and the outer wall 473.

The outer wall 473 extends to the lower end of the outer face 153a of the outer wall 153 of the side sill outer portion 15.

Preferably, the lower wall 474 extends along and is in contact with a lower face 154a of the lower wall 154 of the side sill outer portion 15 and is joined to the lower face 154a by welding or adhesive, for example. In this embodiment, a lower end 474b (a lower tip end) of the lower wall 474 is the lower end of the overlapping part 47.

Since the overlapping part 47 extends to the lower wall 474 of the side sill outer portion 15 as described above, the center pillar 4 is configured to cover the side sill 5 to the lower part thereof. In this way, the joint area between the center pillar 4 and the side sill 5 can be further increased, so that the stress exerted between the side sill 5 and the center pillar 4 during side collision can be further reduced. Furthermore, the load transferred from the center pillar 4 to the side sill 5 during side collision is received by the vehicle body 1 as a torsional moment. Therefore, deformation of the closed cross-sectional shape of the side sill 5, in particular, the side sill outer portion 15, can be reduced. Even if side collision occurs, the original closed cross-sectional shape of the side sill 5 before the collision is more likely to remain, so that the side sill 5 has a high torsional rigidity, and the torsional angle of the side sill 5 during side collision can be reduced. Accordingly, the amount of intrusion of the center pillar 4 and the side sill 5 into the cabin 10 can be reduced. On the other hand, if the arrangement is adjusted so that the center pillar 4 does not reach the lower end (lower flange 155) of the side sill 5, the center pillar 4 can be prevented from being unnecessarily heavy, and an excellent balance can be achieved between improvement of the reinforcement of the side sill 5 by the shape of the lower part of the center pillar 4 and reduction of the increase in weight of the center pillar 4.

The lower end 474b of the overlapping part 47 is a straight end part extending in the front-and-rear direction X, for example. With this configuration, the vehicle body 1 can receive the load transferred from the center pillar 4 to the side sill 5 during side collision as a tortional moment over the entire area in which the overlapping part 47 is arranged in the front-and-rear direction X. Therefore, the closed cross-sectional shape of the side sill 5, in particular, the side sill outer portion 15, can be prevented from collapsing with higher reliability.

In the variation 4, the height position of the joint part 52 is preferably between the height position of the lower end 61b of the upper bracket 61 and the height position of the upper end 62a of the lower bracket 62, as described in the embodiment. Since the overlapping part 47 extends to the lower wall 474 of the side sill outer portion 15, the overlapping part 47 serves in the same manner as the reinforcement member 20 during side collision, and deformation of the side sill 5 is reduced. In this case, if the height position of the joint part 52 is the position described above, a sufficient range of the low strength part 51 can be ensured. Therefore, both the impact absorption by the low strength part 51 in cooperation with the side sill 5 in the early stage of the side collision and the reduction of the deformation of the center pillar 4 toward the cabin 10 due to the high strength part 53 receiving the impact load from the upper bracket 61 in the late stage of the side collision can be achieved.

Note that in the variation 4, the height position of the joint part 52 may be located at a position lower than the height position of the lower end 62b of the lower bracket 62. Furthermore, although the reinforcement member 20 is illustrated in Figure 10 showing the variation 4, the reinforcement member 20 may be omitted.

### <Other Variations>

In the embodiment and variations described above, center pillars have been described as an example of the impact absorbing member according to the present invention. However, this is not intended to be limiting. The impact absorbing member according to the present invention may be a side sill. In that case, for example, a part of the side sill outer portion 15 around the overlapping part 47 is the low strength part 51, and the high strength part 53 is arranged close to the front fastening position or rear fastening position in the side sill 5. In that case, during side collision, the part of the side sill 5 around the overlapping part 47 can exert the impact absorption effect, while the high strength part provided in the front part or rear part of the side sill 5 can prevent the side sill 5 from entering the cabin 10 with higher reliability. Note that the impact absorbing member according to the present invention may be other parts than the center pillar and the side sill.

### EXAMPLE

A model of the vehicle body 1 described in the embodiment (Figures 1 to 3) was produced with a computer. Configurations of the model of the vehicle body 1 in an example and a comparative example are as follows.

### (Configuration in Example)

The Vickers hardness HV₁ and the sheet thickness of the high strength part 53 of the pillar outer portion 41: 600 HV and 1.2 mm. The high strength part 53 was the part described in the variation 1 and included the high strength part softened layers 55.

The Vickers hardness HV₂ and the sheet thickness of the low strength part 51 of the pillar outer portion 41: 350 HV and 1.4 mm.

### (Configuration in Comparative Example)

The Vickers hardness HV₁ and the sheet thickness of the high strength part 53 of the pillar outer portion 41: 1000 HV and 1.2 mm. The high strength part 53 did not include the high strength part softened layers 55 described in the variation 1.

The Vickers hardness HV₂ and the sheet thickness of the low strength part 51 of the pillar outer portion 41: 150 HV and 1.4 mm.

### (Common Configuration in Example and Comparative Example)

The Vickers hardness and the sheet thickness of the pillar inner portion 42: 350 HV and 1.3 mm.

The Vickers hardness and the sheet thickness of the patch 43: 600 HV and 1.2 mm.

The comparative example and the example differ particularly in the following point.

The difference Δθ between the maximum bending angle θ1 of the high strength part 53 and the maximum bending angle θ2 of the low strength part 51 in the comparative example: 105 degrees.

The difference Δθ between the maximum bending angle θ1 of the high strength part 53 and the maximum bending angle θ2 of the low strength part 51 in the example: 20 degrees.

For the comparative example and the example, the presence or absence of a crack in the pillar outer portion 41 during side collision of the vehicle body 1 was measured by computer simulation. The conditions of the side collision were set according to the insurance institute for highway safety (IIHS). Specifically, the test conditions were that an impact load was applied to the center pillar on the assumption of full car crash.

In the comparative example, a crack occurred in the front wall 412 and the rear wall 414 of the high strength part 53 in the vicinity of the joint part 52. On the other hand, in the example, no crack occurred. As can be seen from this result, in the example, no crack occurred in the impact absorbing member during side collision, and the impact absorption performance was able to be ensured due to the prevention of a crack, while the impact absorbing member had a reduced thickness and a reduced weight.

### INDUSTRIAL APPLICABILITY

The present invention can be widely applied as an impact absorbing member.

### REFERENCE SIGNS LIST

- 1: vehicle body
- 4: center pillar (impact absorbing member)
- 5: side sill
- 8: door
- 20: reinforcement member
- 41: pillar outer portion
- 42: pillar inner portion
- 47: overlapping part
- 51: low strength part
- 52: joint part
- 53: high strength part
- 61: bracket
- 61a: upper end of upper bracket
- 62: bracket
- 153: outer wall
- Z: up-and-down direction (longitudinal direction)
- θ₁: maximum bending angle of high strength part
- θ₂: maximum bending angle of low strength part

## Claims

1. An impact absorbing member that is provided in a vehicle body and formed along a predetermined longitudinal direction and includes a part having a cross section perpendicular to the longitudinal direction that has a closed cross-sectional shape, comprising:
a low strength part;
a high strength part that is arranged side by side with the low strength part in the longitudinal direction and has a middle part in a sheet thickness direction that has a Vickers hardness higher than a Vickers hardness of a middle part in the sheet thickness direction of the low strength part; and
a joint part that joins the low strength part and the high strength part to each other,
wherein a maximum bending angle of the high strength part is set in accordance with a maximum bending angle of the low strength part.

2. The impact absorbing member according to claim 1, wherein a difference between the maximum bending angle of the high strength part and the maximum bending angle of the low strength part is 100 degrees or less.

3. The impact absorbing member according to claim 1, wherein the Vickers hardness of the middle part in the sheet thickness direction of the high strength part is 500 HV or more.

4. The impact absorbing member according to claim 3, wherein the Vickers hardness of the middle part in the sheet thickness direction of the low strength part is 150 HV or more.

5. The impact absorbing member according to claim 3, wherein a ratio HV₁/HV₂ of the Vickers hardness HV₁ of the middle part in the sheet thickness direction of the high strength part to the Vickers hardness HV₂ of the middle part in the sheet thickness direction of the low strength part is 1.3 or more.

6. The impact absorbing member according to claim 1, wherein a difference between the maximum bending angle of the low strength part and the maximum bending angle of the high strength part is 30 degrees or less.

7. The impact absorbing member according to any one of claims 1 to 6, wherein the impact absorbing member is a center pillar that includes a pillar inner portion and a pillar outer portion and is arranged in an up-and-down direction of the vehicle body,
the pillar outer portion includes the low strength part, the joint part and the high strength part, and
the high strength part is disposed above the low strength part.

8. The impact absorbing member according to claim 7, wherein the center pillar is provided with a pair of upper and lower brackets for supporting a door installed to a rear of the center pillar, and
the joint part is disposed at a position lower than a height position of a lower end of the upper bracket.

9. The impact absorbing member according to claim 8, wherein the joint part is disposed at a position higher than a height position of an upper end of the lower bracket.

10. The impact absorbing member according to claim 8, wherein the joint part is disposed at a position lower than a height position of a lower end of the lower bracket.

11. The impact absorbing member according to claim 7, wherein the vehicle body further includes a side sill that is joined to a lower part of the center pillar and arranged along a front-and-rear direction of the vehicle body and has a closed cross-sectional shape in a cross section perpendicular to the front-and-rear direction,
the side sill includes an outer wall disposed on an outer side in a width direction of the vehicle body in the side sill,
the lower part of the center pillar includes an overlapping part disposed to cover the side sill at a part coupled to the side sill, and
the overlapping part is arranged along the outer wall of the side sill and extended to below a height position at half a height of the outer wall of the side sill in the up-and-down direction.

12. The impact absorbing member according to claim 1, wherein a Vickers hardness at a surface in the sheet thickness direction of the high strength part is at least 100 HV lower than the Vickers hardness of the middle part in the sheet thickness direction of the high strength part.

13. The impact absorbing member according to claim 12, wherein the high strength part includes a high strength part softened layer extending from the surface in the sheet thickness direction,
the Vickers hardness of the middle part in the sheet thickness direction in a part of the high strength part in which the high strength part softened layer is provided is 500 HV or more,
a thickness of the high strength part softened layer is 80 µm or more and is 5% or more and 20% or less of a sheet thickness of the part of the high strength part in which the high strength part softened layer is provided,
a Vickers hardness of the high strength part softened layer at the surface is 0.5 times or more and less than 0.9 times the Vickers hardness of the middle part in the sheet thickness direction of the part of the high strength part in which the high strength part softened layer is provided,
the high strength part softened layer has a first hardness change region, which is a region from the surface to 40% of a thickness of the high strength part softened layer in the sheet thickness direction, and a second hardness change region, which is a region that is not the first hardness change region in the high strength part softened layer, and
an absolute value ΔHV1 of a change in hardness in the sheet thickness direction in the first hardness change region is greater than an absolute value ΔHV2 of a change in hardness in the sheet thickness direction in the second hardness change region.

14. The impact absorbing member according to claim 1, wherein a Vickers hardness at a surface in the sheet thickness direction of the low strength part is at least 100 HV lower than the Vickers hardness of the middle part in the sheet thickness direction of the low strength part.

15. The impact absorbing member according to claim 14, wherein the low strength part includes a low strength part softened layer extending from the surface in the sheet thickness direction,
the Vickers hardness of the middle part in the sheet thickness direction in a part of the low strength part in which the low strength part softened layer is provided is 150 HV or more,
a thickness of the low strength part softened layer is 80 µm or more and is 5% or more and 20% or less of a sheet thickness of the part of the low strength part in which the low strength part softened layer is provided,
a Vickers hardness of the low strength part softened layer at the surface is 0.5 times or more and less than 0.9 times the Vickers hardness of the middle part in the sheet thickness direction of the part of the low strength part in which the low strength part softened layer is provided,
the low strength part softened layer has a first hardness change region, which is a region from the surface to 40% of a thickness of the low strength part softened layer in the sheet thickness direction, and a second hardness change region, which is a region that is not the first hardness change region in the low strength part softened layer, and
an absolute value ΔHV1' of a change in hardness in the sheet thickness direction in the first hardness change region is greater than an absolute value ΔHV2' of a change in hardness in the sheet thickness direction in the second hardness change region.

16. A vehicle body, comprising a center pillar and a side sill joined to a lower part of the center pillar,
wherein at least one of the center pillar and the side sill is the impact absorbing member according to claim 1.
